(19) Europäisches Patentamt
European Patent Office
Office européen des brevets

(11) **EP 4 672 039 A1**

(12) **EUROPEAN PATENT APPLICATION**

(43) Date of publication:
**31.12.2025 Bulletin 2026/01**

(21) Application number: **25184788.5**

(22) Date of filing: **24.06.2025**

(51) International Patent Classification (IPC):
**G06F 17/16** *(2006.01)*     **G06F 9/38** *(2018.01)*

(52) Cooperative Patent Classification (CPC):
**G06F 17/16; G06F 9/3851; G06F 9/3887;**
**G06F 9/3888**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **25.06.2024 GB 202409107**

(71) Applicant: **Imagination Technologies Limited**
**Kings Langley, Hertfordshire WD4 8LZ (GB)**

(72) Inventors:
• **Cséfalvay, Szabolcs**
**Kings Langley, WD4 8LZ (GB)**
• **Goudie, Alistair**
**Kings Langley, WD4 8LZ (GB)**

(74) Representative: **Slingsby Partners LLP**
**1 Kingsway**
**London WC2B 6AN (GB)**

(54) **FAST MATRIX MULTIPLICATION METHODS AND SYSTEMS**

(57)     The present disclosure relates to a method of performing matrix multiplication on a processing unit. The processing unit comprises processing threads, each thread being associated with a multi-value reading register and a multi-value processing register, wherein a capacity of the multi-value processing register is smaller than a capacity of the multi-value reading register. The method comprising: obtaining address data identifying a first matrix input and a second matrix input; transforming at least a portion of the second matrix input to obtain a transformed second matrix input, comprising redistributing a plurality of adjacent linear arrays of the second matrix input to form a single linear array in the transformed second matrix input; obtaining a first matrix subunit from the first matrix input and a transformed second matrix subunit from the transformed second matrix input; and obtaining, using a multi-value reading register, a linear array, **R,** from the single linear array of the transformed second matrix subunit. The method further comprises, at a thread of the processing unit: obtaining a plurality of values from the first matrix subunit; and for each value in the linear array **R,** multiplying the value with a corresponding value from the plurality of values of the first matrix subunit and accumulating the results of the multiplying in a linear array **P,** stored in a multi-value processing register associated with the thread, wherein the accumulated results form at least a portion of an output matrix.

FIGURE 13

**Description**

CROSS-REFERENCE TO RELATED APPLICATION

This application claims priority from UK patent application GB2409107.6 filed on 25 June 2024, which is herein incorporated by reference in its entirety.

TECHNICAL FIELD

The present disclosure relates to performing matrix multiplication on a multithreaded processing system.

BACKGROUND

Matrix multiplication can be implemented straightforwardly using single instruction, multiple data (SIMD) parallel processing. This is because matrix multiplication involves repetitions of identical multiplication and addition operations performed over different arrays of values. Matrix multiplication is therefore well-suited to being implemented in a multi-threaded processing environment. In this context, a "thread" is a task (e.g. an operation or sequence of operations) to be performed with respect to particular input data (and many threads may perform the same task or different tasks with respect to different input data).

In an ideal multi-processing environment, it may be straightforward to implement matrix multiplication using a plurality of processing threads. For example, a plurality of threads may be allocated to rows of a matrix to be multiplied, one thread per row. Alternatively, a thread may be allocated to each individual pair-wise array of values to be multiplied. Each thread or group of threads would then be responsible for performing the multiplication and addition operations for its row of values. Presuming that the multiplication happens in lockstep for all threads, two matrices may be multiplied efficiently. Any bottleneck in the processing would thus arise from the time it takes to organise, read, and write the necessary data values.

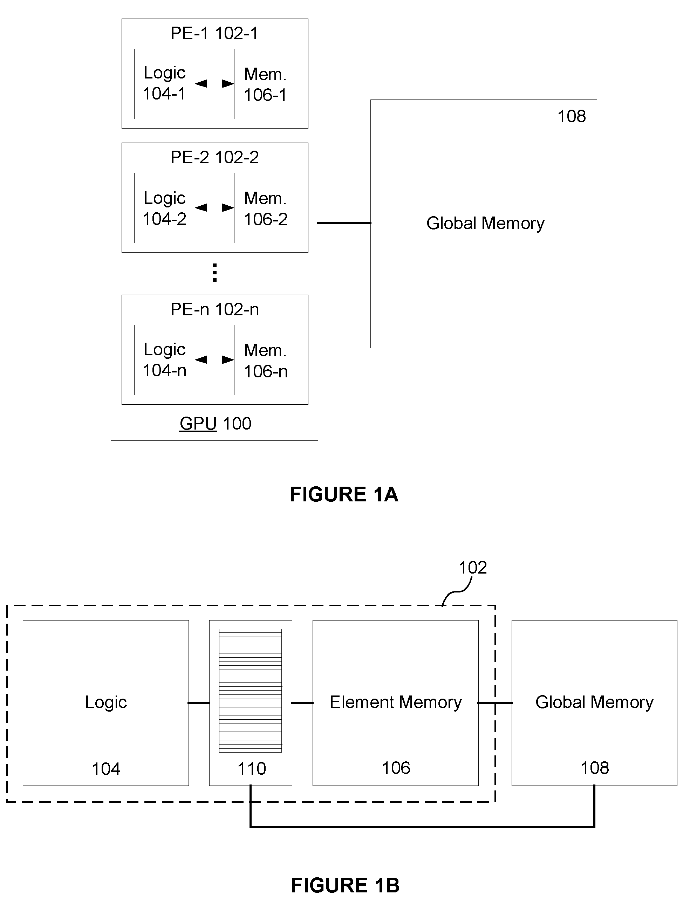

Figure 1A shows an example multi-threaded processor which, in this case, is a graphics processing unit (GPU) 100 connected to global memory 108. The global memory may also form part of the GPU or may be external to the GPU. Work to be performed by a GPU can be arranged into 'workgroups', 'warps' and 'threads'. A workgroup may comprise one or more warps. In some examples, a warp may be notionally the same entity as a workgroup. A warp comprises a plurality of threads configured to process an instruction in parallel within a core ('processing element') 102 of the GPU 100. The number of threads in a warp may be predetermined. In some examples, the number of threads in a warp may be predetermined at a hardware level of the GPU. Generally, a warp is characterized by a plurality of threads, where each thread in the warp concurrently performs an instruction in lockstep with other threads in the warp.

In simple form, the maximum efficiency speedup of a parallelisable system (accounting for the type of algorithm and the type of resources available) can be expressed via Amdahl's law:

$$S_{speedup}(s) = \frac{1}{(1-p) + \frac{p}{s}}$$

where $S_{speedup}(s)$ represents the maximum theoretical speedup of the algorithm, and $p$ represents the proportion of the execution time, when performed in serial form, attributable to the part of the algorithm that can be parallelised. The variable s represents the actual speedup factor of the part of the algorithm that has been subject to parallelisation. For example, a system with $p = 0.95$ will have a maximum obtainable speedup factor of 20, with infinitely many parallel threads (i.e., s tending towards infinity). In straightforward cases, s is roughly representative of the number of threads operating in parallel (e.g., two parallel threads may at best cause a speedup factor of 2).

Data used to multiply matrices are ultimately read from some memory, i.e., either global memory 108, or another type of memory which is collectively shown as 'mem. 106' in figure 1A. All temporary values produced during matrix multiplication are stored in some location within a memory of the processing element 102. The handling of data when multiplying two matrices therefore takes up computing resource time. Every memory component associated with a processing element 102 will have a maximum storage capacity, and each will have a finite bandwidth associated with it. Moreover, the coupling or path (e.g., bus) between memories will have a finite bandwidth associated with it. Thus, in many instances, it is difficult or impossible to parallelise data-handling operations, and these limitations create bottlenecks that cannot be overcome by using more threads. The bottlenecks associated with data handling and memory resources thus reduce the value of $p$. Very large matrices (e.g., having thousands or tens of thousands of values) can exacerbate bottlenecks caused by data-handling, particularly if cache storage within processing elements is limited, thus reducing $p$ further.

Even for algorithms such as matrix multiplication whose straightforward operations can be readily exploited by parallel processing, various other bottlenecks must be overcome in order to fully exploit the parallelisability of the algorithm. This is non-trivial, since the requirements of the system can vary depending on the type or size of data, and a detailed understanding of the underlying resources is necessary. The interaction between the type and size of data being handled and the system resources should therefore be accounted for when designing a parallel algorithm.

It is with these problems in mind that the present disclosure is directed.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a computer-implemented method of performing matrix multiplication on a processing unit, wherein the processing unit comprises one or more processing threads, each thread being associated with a multi-value reading register and a multi-value processing register, wherein a capacity of the multi-value processing register is smaller than a capacity of the multi-value reading register, the method comprising:

> obtaining address data identifying a first matrix input and a second matrix input;
> transforming at least a portion of the second matrix input to obtain a transformed second matrix input, comprising redistributing a plurality of adjacent linear arrays of the second matrix input to form a single linear array in the transformed second matrix input;
> obtaining a first matrix subunit from the first matrix input and a transformed second matrix subunit from the transformed second matrix input;
> obtaining, using a multi-value reading register, a linear array, **R,** from the single linear array of the transformed second matrix subunit;
> at a thread of the processing unit:
>
>> obtaining a plurality of values from the first matrix subunit;
>> for each value in the linear array **R,** multiplying the value with a corresponding value from the plurality of values of the first matrix subunit and accumulating the results of the multiplying in a linear array **P,** stored in a multi-value processing register associated with the thread, wherein the accumulated results form at least a portion of an output matrix.

The processing unit may be or may be part of a graphics processing unit. Advantageously, because of the data transformation, all of the values from linear array R read from the second matrix can be used in conjunction with the values in the smaller linear array P. Without the transformation, some of the values read by the multi-value reading register may not be usable by the processing register. Values would be unusable if they are taken from a row or column of the second matrix that does not correspond with a value read by the multi-value processing register. This problem arises because the multi-value processing register may not hold as many values as can be read by the multi-value reading register. If both registers held the same number of values, no transformation would be needed. The skilled person will appreciate that at least a partial multiplication of two matrices is possible with mismatched register sizes. However, a size mismatch can be wasteful if every read from the second matrix contains surplus values which cannot be immediately used in a multiplication.

In example implementations, the multi-value reading register and the multi-value processing register are configured to read a plurality of contiguous values from a linear array of values.

In example implementations, the multi-value processing register comprises a plurality of processing cells, wherein the thread of the processing unit is configured to operate the multi-value processing register to perform concurrent multiplication operations, one operation per processing cell.

In example implementations, the transforming the portion of the second matrix input comprises: redistributing two or more adjacent linear arrays of having a first dimension to form at least part of a single linear array in the first dimension. For example, this example involves redistributing all values in two adjacent columns to form a single row containing all those values.

In example implementations, the capacity of the multi-value processing register is half the capacity of the multi-value reading register, and a number of values in the linear array P is half a number of values in the linear array **R,** the method comprising:

for each value plurality of values of the first matrix subunit:

multiplying the value with two respective values in the linear array **R,** and accumulating the multiplication results in a respective cell in the linear array **P** stored in the multi-value processing register;
wherein an accumulated result in each respective cell of the multi-value processing register contributes to a respective cell of the output matrix.

In example implementations, the multi-value processing register comprises a plurality of processing cells, wherein the thread of the processing unit is configured to operate the multi-value processing register to perform concurrent multiplication operations, one operation per processing cell.

In example implementations, the processing unit comprises groups of threads defining workgroups, wherein each workgroup of threads is associated with a dedicated reading registers arranged to service all thread in the workgroup.

In example implementations, the processing unit comprises a plurality of threads, and wherein each thread is coupled with a dedicated multi-value processing register.

In example implementations, each thread of the plurality of threads concurrently generates a respective linear array of the output matrix by performing the obtaining and multiplying steps.

In example implementations, each thread of the plurality of threads obtains a common linear array, **R,** from the second dimension of the transformed second matrix subunit, and retrieves a different plurality of values from the first matrix subunit.

In example implementations, the step of obtaining the linear array, **R,** using the multi-value reading register comprises a single clock cycle.

In example implementations, the step of obtaining the linear array, **R,** is performed concurrently with at least part of the step of multiplying. The first matrix subunit may be stored in a cache dedicated to the processing unit.

In example implementations, the second matrix subunit is stored in a local memory dedicated to the processing unit. In example implementations, the step of transforming at least a portion of the second matrix input to obtain the transformed second matrix input is performed prior to obtaining the address data, and wherein the second matrix input identified by the address input is the transformed second matrix input. Advantageously, performing transformation offline saves time during matrix multiplication.

There is also provided a method of performing matrix multiplication in a multithreaded processing system, wherein the multithreaded processing system comprises one or more processing units, each processing unit coupled with i) a dedicated cache and ii) a dedicated local memory, and wherein each processing unit is configured to operate a plurality of threads grouped into a plurality of workgroups, the method comprising:

   obtaining address data identifying a first matrix input and a second matrix input;
   for a first processing unit of the multithreaded processor:

      storing, in a cache dedicated to the first processing unit, at least a portion of the first matrix input as one or more first matrix subunits;
      storing, in a local memory dedicated to the first processing unit, at least a portion of the second matrix input as a plurality of second matrix subunits;

   generating a plurality of output matrix subunits, the generating comprising:

      launching, at the first processing unit, a plurality of workgroups;
      for each launched workgroup of the launched plurality of workgroups:

         assigning a subset of one or more second matrix subunits to the workgroup;
         multiplying, by threads of the workgroup, each of the one or more first matrix subunits with a corresponding second matrix subunit of the subset of second matrix subunits to obtain an output matrix subunit;

      wherein, during the generation of the plurality of output matrix subunits, the one or more first matrix subunits are concurrently accessed by each launched workgroup from the cache dedicated to the first processing unit.

There is also provided a method of performing matrix multiplication in a multithreaded processing system, wherein the multithreaded processing system comprises one or more processing units, each processing unit coupled with i) a dedicated cache and ii) a dedicated local memory, and wherein each processing unit is configured to operate a plurality of threads grouped into a plurality of workgroups, the method comprising:

   obtaining address data identifying a first matrix input and a second matrix input;
   for a first processing unit of the multithreaded processor:

      storing, in a cache dedicated to the first processing unit, at least a portion of the first matrix input as one or more first matrix subunits;
      storing, in a local memory dedicated to the first processing unit, at least a portion of the second matrix input as a plurality of second matrix subunits;

generating a plurality of output matrix subunits, the generating comprising:

launching, at the first processing unit, a plurality of workgroups;
for each launched workgroup of the launched plurality of workgroups:

assigning a subset of one or more second matrix subunits to the workgroup;
combining, by threads of the workgroup, each of the one or more first matrix subunits with a corresponding second matrix subunit of the subset of second matrix subunits to obtain an output matrix subunit;

wherein, during the generation of the plurality of output matrix subunits, the one or more first matrix subunits are concurrently accessed by each launched workgroup from the cache dedicated to the first processing unit.

In other words, the one or more first matrix sub-units are maintained in the cache and reused by each workgroup for each output matrix subunit to be generated. It should be appreciated that the term 'available within first processing unit' does not necessarily define 'comprised within' the first processing unit'. The number of workgroups may be limited depending on hardware factors and/or factors such as a number of registers available, a size of the input, and other external factors. Thus, the number of workgroups available within first processing unit may be less than the theoretical maximum number of workgroups that a first processing unit comprises, e.g., as determined by the hardware. Obtaining the output matrix subunit may comprise accumulating results of each the respective multiplications between each first matrix subunit of the plurality of first matrix subunits and each corresponding second matrix subunit of the subset of second matrix subunits. The multiplying may comprise accessing, by each workgroup of the subset of workgroups, the plurality of first matrix subunits at a common storage address in the cache dedicated to the first processing unit.

In example implementations, the step of multiplying, by each launched workgroup, each one or more first matrix subunit with a corresponding second matrix subunit of the one or more second matrix subunits comprises using every thread of the launched workgroup to handle a respective array of values of a plurality of arrays forming the first matrix subunit. The multiplying may comprise, each array of values of the plurality of arrays forming the first matrix subunit, using a respective thread of the launched workgroup to multiply the array of values with each array of a plurality of arrays forming a corresponding second matrix subunit, and accumulating the result.

In example implementations, each workgroup is defined by a predetermined number of threads configured to perform the same instruction concurrently. In other words, a workgroup may be a warp. The predetermined number of threads configured may be fixed in circuitry of the multithreaded processing system.

In example implementations, dimensions of the second matrix subunits are determined in dependence on i) a storage capacity of the local memory and ii) a threshold number of workgroups available within the first processing unit.

In example implementations the dimensions of the second matrix subunits comprise a first dimension, $K_s$, and a second dimension, $N_s$, and determining the dimensions of the second matrix subunits comprises:

determining a total available storage in the local memory, $LM_{total}$;
selecting at least one of: i) the first dimension, $K_s$, and ii) the second dimension, $N_s$, to satisfy:

$$K_S \times N_S \leq \frac{LM_{total}}{C \times O}$$

where O defines a number of target workgroups in a processing unit and C defines the size of a matrix value.

In example implementations, determining the dimensions of the second matrix subunits further comprises:

determining an available register space, $R_{WG}$, in dependence on a number of excess registers used by each workgroup;
selecting the first dimension, $K_s$, and the second dimension, $N_s$, to satisfy:

$$K_S + N_S + R_{WG} \leq \frac{R_{PU}}{O}$$

where $R_{PU}$ defines a register availability of the processing unit. The term excess may define that the registers are used for purposes other than storing the first input and the output subunits.

In example implementations, each subset of second matrix subunits assigned to respectively launched workgroups form different portions of the second matrix input. Respective subsets of second matrix subunits may thus be allocated to respectively launched workgroups from non-overlapping locations of storage within the local memory. In other words, each workgroup has access to its own portion of local memory. That portion of local memory may not overlap with portions allocated to other workgroups.

In example implementations, a remainder of available storage in the cache dedicated to the first processing unit not used to store the portion of the first matrix input unit is less than an amount of storage required to store one first matrix subunit. In other words, the maximum number of first matrix subunits that it is possible to store in the cache may be stored in the cache. This can have the advantage of increasing the time interval between successive cache storing operations.

In example implementations, a second dimension, $N_S$, of each second matrix subunit of the plurality of second matrix subunits is determined in dependence on a bandwidth of the cache. The second matrix subunit may not be stored in the cache, but may be multiplied with first input values that are read from a cache. Thus, the bandwidth/speed at which first input values can be read from the cache affects how much second input data can be multiplied with first input data. Consequently, the cache bandwidth can impose a constraint on the dimensions of the second matrix subunit. For example, if only 32 values can be read from a cache per clock cycle, but the processing resources (e.g., threads and registers) are capable of performing 128 fused multiply-adds (FMAs) per clock cycle, the only way to perform 128 FMAs every clock would be to use each value read from cache at least four times ($128/32 = 4$). Thus, indirectly, $N_s$ represents the number of times one can use each value read from a from cache, so Ns is indirectly dependent on cache bandwidth.

In example implementations, a first dimension, $M_S$, of each first matrix subunit is equal to an integer multiple of a number of threads of each workgroup. In examples, n>1, where n=1, i.e., such that the first dimension is equal to the number of threads. For example, the number of rows of the first matrix subunit is equal to the number of threads of each workgroup.

In example implementations, subsequent to generating the plurality of output matrix subunits, a further portion of the first matrix input is stored in the cache as a further one or more first matrix subunits, wherein the further portion of the first matrix input is used to generate a further plurality of output matrix subunits using the stored portion of the second matrix input.

In example implementations, the method further comprises:

for at least one further processing unit comprised within the multithreaded processing system:

storing, in a cache dedicated to the further processing unit, a further portion of the first matrix input as a further one or more first matrix subunits;
storing, in a local memory dedicated to the further processing unit, at least a portion of the second matrix input as a plurality of second matrix subunits;

wherein generating the plurality of output matrix subunits comprises generating multiple pluralities of output matrix subunits, one plurality of output matrix subunits per processing unit. Thus, one plurality of output matrix subunits may be generated for the first processing unit and each one or more further first processing unit.

In example implementations, the plurality of second matrix subunits stored in the local memory dedicated to each at least one further processing unit is the same plurality of second matrix subunits stored in the local memory of the first processing unit. In examples, different first matrix subunits are stored in each dedicated cache for each different processing unit, but the same second matrix subunits are stored in each local memory. In other words, a copy of the same portion of second matrix input may be stores in all of the local memories of all processing units.

In example implementations, a plurality of workgroups is launched from each processing unit, the method further comprising:

forming logical groups of workgroups;
assigning each logical group to a respective cache;
wherein the assignment of logical groups to respective caches defines the cache from which each logical group of workgroups retrieves the one or more first matrix subunit during the multiplying. The logical group of workgroups may or may not belong to the same processing unit.

In example implementations, for each logical group of workgroups: the logical group belongs to a common first processing unit, and the respective cache assigned to the logical group is a dedicated cache to that common first processing unit, wherein, during the generating the plurality of output matrix subunits, each workgroup retrieves each one or more first matrix subunit from the dedicated cache without the dedicated cache retrieving further first matrix subunits. An advantage of this is that it avoids simultaneously caching data in caches.

In example implementations, a number of the first matrix subunits allocated to the cache dedicated to the first processing unit is equal to a number of the respective subset of second matrix subunits stored in the local memory and allocated to each workgroup.

In example implementations, each workgroup of the launched plurality of workgroups operates concurrently to multiply each of the one or more first matrix subunits with the corresponding second matrix subunit.

In example implementations, the step of multiplying comprises retrieving, by a multi-value reading register associated with the workgroup, a plurality of contiguous values from the corresponding second matrix subunit forming a linear array, R.

In example implementations, the step of multiplying comprises concurrently processing, by a multi-value processing register associated with a thread of the workgroup, linear array R with a plurality of contiguous values retrieved from the first matrix subunit forming a linear array, P.

In example implementations the concurrent processing comprises: performing concurrent multiplication operations, one operation per cell in the multi-value processing register, wherein each multiplication operation comprises multiplying a value in the linear array R with a corresponding value from the linear array **P.** Optionally, the multiplication operation is a multiply-add operation. Because of the data swizzling, all of the values from linear array R read from the second matrix can be used.

In example implementations, a capacity of the multi-value processing register is smaller than a capacity of the multi-value reading register, the method further comprising: transforming at least a portion of the corresponding second matrix subunit to obtain a transformed second matrix subunit, comprising redistributing a plurality of adjacent linear arrays of the second matrix subunit into a single array; wherein the linear array, **R,** is formed of a plurality of contiguous values from the transformed second matrix subunit.

In example implementations, all data from the linear array, **P,** is processed by the multi-value processing register in conjunction with all data from the linear array, **R,** during the multiplying. In this example, the size of P defines the number of available registers slot in the dedicated processing register, and size of R defines number of available slots in dedicated reading register (also called a slot register).

In example implementations, transforming at least a portion of the corresponding second matrix comprises transforming the second matrix input, prior to the multiplying, to obtain a transformed second matrix input, and wherein each of the plurality of second matrix subunits stored in the local memory dedicated to the first processing unit are transformed second matrix subunits.

In example implementations, the multithreaded processing system is a graphics processing unit, GPU.

In examples, storing the portion of the first matrix input may comprises storing data representing the first matrix input in contiguous storage cells of the cache dedicated to the first processing unit; and/or storing the portion of the second matrix input comprises storing data representing the second matrix input in contiguous storage cells in the local memory dedicated to the first processing unit. Storage in contiguous cells can dramatically improve read/write times from/to the storage medium.

There is also provided a multithreaded processing system for performing matrix multiplication comprising:

a plurality of processing units, wherein each processing unit is coupled with:

> a dedicated respective cache;
> a dedicated respective local memory,

wherein each processing unit is configured to operate a plurality of threads grouped into a plurality of workgroups, the multithreaded processing system being configured to:

> obtain address data identifying a first matrix input and a second matrix input;
> for a first processing unit of the multithreaded processor:

>> store, in a cache dedicated to the first processing unit, at least a portion of the first matrix input as a plurality of first matrix subunits;
>> store, in a local memory dedicated to the first processing unit, at least a portion of the second matrix input as a plurality of second matrix subunits;
>> determine dimensions of the second matrix subunits in dependence on i) a storage capacity of the local memory and ii) a threshold number of workgroups available within the first processing unit;

> generate a plurality of output matrix subunits by:

>> launching, at the first processing unit, a plurality of workgroups;
>> for each launched workgroup of the launched plurality of workgroups:

>>> assigning a respective subset of second matrix subunits to the workgroup;

multiplying, by threads of the workgroup, each first matrix subunit of the plurality of first matrix subunits with a corresponding second matrix subunit of the respective subset of second matrix subunits to obtain an output matrix subunit;

wherein the multithreaded processing system is configured, during the generation of the plurality of output matrix subunits, to maintain the plurality of first matrix subunits in the cache dedicated to the first processing unit to be reused by each launched workgroup.

There is also provided a multithreaded processing system configured to perform any of the methods disclosed herein.

There is also provided a computer readable storage medium having encoded thereon computer readable code configured to cause any of the methods disclosed herein to be performed when the code is run

There is also provided an integrated circuit definition dataset that, when processed in an integrated circuit manufacturing system, configures the integrated circuit manufacturing system to manufacture a multithreaded processing system as disclosed herein.

There is also provided a non-transitory computer readable storage medium having stored thereon a computer readable description of a multithreaded processing system as disclosed herein, when processed in an integrated circuit manufacturing system, causes the integrated circuit manufacturing system to manufacture an integrated circuit embodying the multithreaded processing system.

The multi-threaded processing system may be embodied in hardware on an integrated circuit. There may be provided a method of manufacturing, at an integrated circuit manufacturing system, a multi-threaded processing system. There may be provided an integrated circuit definition dataset that, when processed in an integrated circuit manufacturing system, configures the system to manufacture a multi-threaded processing system. There may be provided a non-transitory computer readable storage medium having stored thereon a computer readable description of a multi-threaded processing system that, when processed in an integrated circuit manufacturing system, causes the integrated circuit manufacturing system to manufacture an integrated circuit embodying a multi-threaded processing system.

There may be provided an integrated circuit manufacturing system comprising: a non-transitory computer readable storage medium having stored thereon a computer readable description of the multi-threaded processing system; a layout processing system configured to process the computer readable description so as to generate a circuit layout description of an integrated circuit embodying the multi-threaded processing system; and an integrated circuit generation system configured to manufacture the multi-threaded processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1A shows an example multi-threaded system with multiple processing elements;

Figure 1B shows a simplified memory hierarchy of a processing element 102 of Figure 1A;

Figure 2 shows a detailed memory hierarchy of a processing element 102 of Figure 1A;

Figure 3A shows an example data organisation of data for matrix multiplication according to presently disclosed embodiments;

Figure 3B shows a detailed view of the data organisation shown in Figure 3A;

Figure 4 another example data organisation of data for matrix multiplication according to presently disclosed embodiments;

Figure 5 is a flowchart illustrating an example method for organising multiplication operations in a multi-threaded system according to the data shown in figure 4;

Figure 6 shows a detailed data organisation illustrating how matrix subunits may be allocated to threads in presently-disclosed embodiments;

Figure 7A shows a detailed data organisation illustrating how matrix elements are organised according to presently disclosed embodiments;

Figure 7B is a detailed schematic showing data and thread organisation for matrix multiplication according to presently disclosed embodiments;

Figure 8 shows how workgroups of threads may be organised according in one embodiment;

Figure 9A shows how workgroups of threads may be organised according to an improved embodiment;

Figure 9B shows a logical schematic of the workgroup organisation of figure 9A in use with matrix data;

Figure 10 shows a detailed view of memory and register arrangement in a single processing unit within a processing element;

Figure 11 schematically illustrates a method of data organisation and handling showing how a workgroup of threads may handle matrix data according to one embodiment;

Figure 12A schematically illustrates an improved arrangement of data organisation according to presently-disclosed embodiments;

Figure 12B shows an unswizzled second input matrix with shading to serve a comparison with figure 12C;

Figure 12C shows a further example of swizzled data formed from the matrix in figure 12B that rearranges in four-column widths;

Figure 13 schematically illustrates a method of data organisation and handling showing how a workgroup of threads may handle the data according to the improved embodiment of figure 12A;

Figure 14 is a flowchart illustrating a method of inter-workgroup organisation according to presently-disclosed embodiments;

Figure 15 is a flowchart illustrating a method of intra-workgroup organisation according to presently-disclosed embodiments;

Figure 16 shows a computer system in which a graphics processing system is implemented; and

Figure 17 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. Some terminology is used interchangeably, and some is used with more specific meanings. Generally, the term 'core' is used interchangeably to refer to some part of the multi-threaded system housing a collection of threads. The terms 'parallel' and 'concurrently' are used generally to describe a plurality of threads that operate at least to some extent at the same time; concurrent threads do not necessarily operate simultaneously, or begin or end execution at the same point in time. The term 'lockstep' is used to describe a plurality of threads that operate substantially simultaneously and begin and end execution at substantially the same point in time. A 'processing element' is used to refer to a portion of a multi-threaded system that has at least some dedicated memory, e.g., illustrated in Figure 1A. A 'processing unit' is generally used to refer to a unit within a processing element that comprises a plurality of threads (that may be grouped into workgroups). A 'processing unit' also has some form of its own dedicated memory. The term 'on-chip' memory is used as a general term to describe some form of dedicated memory, i.e., memory dedicated to only one processing element, or processing unit, or specific set of processing elements, and not shared with at least some other processing element(s). The terms 'cache' and 'local memory' in this disclosure relate to more specific parts of on-chip memory that are described in the present disclosure.

A graphics processing unit typically comprises one or more processing elements. In Figure 1A, the graphics processing unit 100 is shown comprising three processing elements - labelled as 102-1, 102-2 and 102-n. A multi-threaded system configured in accordance with the principles described herein could comprise any suitable number of processing elements. The structure containing the processing elements is labelled a GPU 100 merely for example. It should be appreciated that the housing 100 could be any multi-threaded processing system for the purposes of the present disclosure. Processing units, such as the processing unit 100 in figure 1A, can perform operations on arrays (e.g. one-dimensional or multi-dimensional arrays of values) or matrices of values, or more generally on n-dimensional tensors of values. In examples, the values of said arrays or matrices of values can represent pixel values, audio samples of an audio signal, signal samples of a transmitted signal, or any other suitable type of values.

Each processing element 102 comprises processing logic 104 and a memory 106. That is, in Figure 1A: processing element 102-1 comprises processing logic 104-1 and memory 106-1; processing element 102-2 comprises processing logic 104-2 and memory 106-2; and processing element 102-n comprises processing logic 104-n and memory 106-n. Each respective memory 106 may be available for the storage of data exclusively by / for the respective processing logic 104 in each processing element 102. Each memory 106 may be physically co-located (e.g. in the same region or vicinity on the same semiconductor die and/or in the same integrated circuit package) with the processing logic 104 of each processing element 102. Each memory 106 may be referred to as "on-chip memory" or "internal memory"; however, the specific types of memory (e.g., L0 and L1 cache, local memory, and the like) encompassed by this on-chip memory 106 is described in detail in other parts of the present disclosure. The processing logic 104 of each processing element 102 may be able to access its respective on-chip memory 106 without consuming memory bandwidth to the global memory 108.

Memory 108 may also be accessible to the processing logic 104 of each processing element 102, e.g. over a system bus. Graphics processing unit 100 may be implemented on a chip (e.g. semiconductor die and/or integrated circuit package) and memory 108 may or may not be physically located on the same chip (e.g. semiconductor die and/or integrated circuit package) as the graphics processing unit 100. As such, global memory 108 may be referred to as "off-chip memory" and/or "external memory". Global memory 108 may be used to store data for other processing units of the system at which the graphics processing unit is implemented, e.g. a central processing unit (CPU - not shown in Figure 1A), and so may also be referred to as "system memory". Global memory 108 may be a dynamic random access memory (e.g. DRAM). Relative to the storage capacity of each on-chip memory 106, global memory 108 will likely have a large storage capacity, e.g., about 10 GB (gigabytes), or more. Additionally, the latency associated with processing logic 104 reading from or writing to global memory 108 may be greater (e.g., significantly greater) than the latency associated with processing logic 104 reading from or writing to some part of its on-chip memory 106. Furthermore, the bandwidth for read/write operations between processing logic 104 and global memory 108 may be less than between processing logic 10 and on-chip memory 106.

Therefore, presently disclosed embodiments are directed at storing as much data as possible amongst on-chip memory 106 at a given time. Specifically, presently disclosed embodiments are aimed at allocated data in on-chip memory 106 such that it can be re-used to the greatest extent possible, thus mitigating the frequency of data retrievals from external memory 108. As described in further detail herein, other types of memory (e.g., caches, registers or any other suitable type of memory - not shown in Figure 1A for ease of illustration) are accessible to the processing logic 104 of each processing element 102.

Work to be performed by a processing unit that is capable of (e.g., configured to perform) parallel processing can be arranged into "workgroups", "warps" and "threads". A workgroup may comprise one or more warps. A warp may comprise a plurality of threads, where that plurality of threads can be processed in parallel. Generally, threads within a warp are executed in lockstep with one another. Separate warps and/or workgroups may also run concurrently with one another; however, the threads of different warps and/or workgroups do not have to (and likely will not) run in lockstep. In examples where a workgroup comprises more than one warp, each of those warps can be processed in series at a single core of a graphics processing unit (or in parallel by alternating/interleaving the execution of the warps). Separate workgroups may be processed independently of each other (e.g. at different cores of a graphics processing unit, or in series at a single core of a graphics processing unit). Threads within the same workgroup (e.g. threads within the same warp of a workgroup, and threads within different warps of the same workgroup) may be able to share access during their processing to memory dedicated to the core or processing unit processing those threads (e.g. a local memory or cache, formed within the on-chip memory 106, that is dedicated to the processing logic 104 processing those threads). Further, warps within the same workgroup, and indeed different workgroups, may be able to share access during their processing to memory dedicated to the processing unit processing those threads (e.g., a local memory or cache, formed within the on-chip memory 106).

A warp may be arranged as an array of threads (e.g., a one-dimensional, two-dimensional or three-dimensional array of threads). The number of threads comprised by a warp may be limited, and/or pre-determined. The number of threads comprised by a warp may be limited by hardware restriction, e.g., a limit on how many threads can be processed in lockstep on the available processing hardware. In an example, a warp may comprise up to 128 threads. In this example, if more than 128 threads are to perform the same operation, then more than one warp will be associated with that operation. For example, if 2048 threads are to perform the same operation, then sixteen warps may be associated with that operation. Said sixteen warps may be comprised within the same workgroup, or may be divided between a plurality of workgroups (e.g., up to sixteen different workgroups). It is to be understood that the 'workgroup', 'warp' and 'thread' terminology used herein is not intended to be limiting, and that other terminology could be used to describe the same concepts. For example, a 'thread' as described herein could alternatively be referred to as an 'invocation' or a 'work-item', whilst a 'workgroup' as described herein could alternatively be referred to as a 'thread block' or a 'thread-group'.

Figure 1B shows an example memory hierarchy accessible by the processing logic 104 of a processing element 102. In Figure 1B, for ease of illustration, the memory hierarchy associated with a single processing element 102 is shown. It is to be understood that each processing element 102 of a multi-processing system processing unit (e.g., processing unit 100 of Figure 1A) may be associated with an equivalent memory hierarchy to that shown in Figure 1B.

In Figure 1B, processing logic 104, memory 106 and global memory 108 have the same properties as the processing logic 104, memory 106 and global memory 108 described with reference to Figure 1A. Also shown in Figure 1B is a register bank 110 comprised within the processing element 102. Register bank 110 comprises a plurality of registers (e.g. register memories). Relative to the storage capacity of the 'on-chip' element memory 106, each register of the register bank 110 has a small storage capacity, e.g. 32 bits, or even less. Different types of registers having different storage capacities may exist in the register bank. The latency associated with processing logic 104 reading from / writing to the register bank 110 may be less than the latency associated with processing logic 104 reading from / writing to the -on-chip memory 106. The register bank 110 may be physically located on the same chip (e.g. on the same semiconductor die and/or in the same integrated circuit package) as the processing logic 104. The register bank 110 may be physically located on the same chip (e.g. on the same semiconductor die and/or in the same integrated circuit package) as the on-chip memory 106 of the processing element 102.

When processing logic 104 is processing a warp comprising a plurality of threads, a respective one or more registers of the register bank 110 may be dedicated to (e.g., accessible exclusively by) each thread of the warp. That is, values processed by a thread may in reality be stored and/or processed in one or more registers accessible by that thread. This type of register may be referred to as a "processing register" elsewhere in this disclosure. Other threads within the same warp may not be able to access values stored within the one or more 'processing registers' registers accessible by that thread.

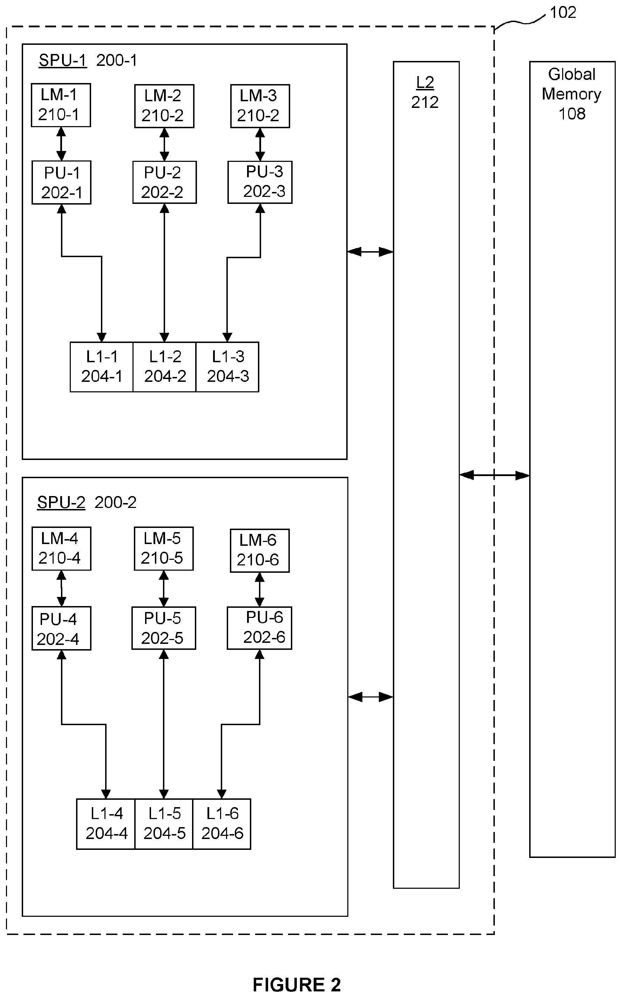

Figure 2 shows a more detailed memory hierarchy of a processing element 102. For the purposes of this example, the processing element 102 is described as part of a graphics processing unit, GPU, and the processing element 102 can be thought of as one 'core' of the GPU. The nomenclature used in this example relates to GPUs. Nevertheless, this example does not restrict the presently-disclosed methods to being performed on a GPU; generally, any multi-threaded processing system is suitable since the values represented by matrices are independent of the method of multiplying said matrices.

Each processing element/core 102 comprises two sub-cores 200, in this case referred to as SPU (shader processing unit). Both SPUs 200-1, 200-2 share a level 2 cache (L2 cache) 212. The level 2 cache is then coupled to the global memory 108, which is at the 'top' of the memory hierarchy in this example. The structure of each SPU within the core 102 is substantially identical. In this example, each SPU 200 comprises three processing units 202 (e.g., PU 202-1, PU 202-2, and PU 202-3 belong to SPU 202). Each processing unit 202 is coupled with a dedicated level 1 cache (L1 cache) 204, and each processing unit 202 is also coupled with a dedicated local memory 210. Dedicated in this sense means that each processing unit has exclusive access. In some examples, e.g., where the core 102 is part of a GPU, the L1 caches may be referred to as texture cache units (TCU), since they may be used for storing texture data. In some examples, matrices of the present disclosure can be stored in texture cache units and read as texture data. In the example of figure 2, each SPU 200 sub-core comprises three processing units 202, three dedicated local memories 210, and three dedicated L1 caches 204. The cache hierarchy shown is merely exemplary, and each SPU 200 may contain additional caches which may be arranged for specific data storage purposes: for example, additional caches may be configured for buffer data to be shared by each of the three processing units 202. In other examples, each SPU 200-1, 200-2 may comprise only two each of the processing units 202, dedicated local memories 210, and dedicated L1 caches 204. Generally, data such as buffer data may also be distributed across the processing units 202 within an SPU 200 from a common/shared cache level (i.e., a cache to which all PUs 202 have access). The shared cache could be the L2 cache or another shared cache at the SPU 200 level or a higher level.

The schematic lines in figure 2 are intended only to show the connectivity of the memory and processing elements, e.g., to indicate which memories and caches are dedicated to processing units, and to indicate which elements may not have a connecting pathway. The schematics are not intended to show the physical location or design of suitable multi-threaded systems. For example, different elements separated by boundaries may in fact form the same integrated unit; conversely, elements shown as a single entity in figure 2 may be formed of multiple distinct entities. In some specific examples, the L1 caches (e.g., L1-1 204-1, 204-2, etc) referred to could be implemented as a user-managed piece of memory (e.g., a buffer) where data is read to/removed from manually.

Not shown in figure 2 are the register banks accessible to each processing unit 202. Each processing unit 202 comprises a plurality of warps (which may themselves be grouped into workgroups). The grouping of warps into workgroups can vary. However, in general, the number of warps in a processing unit 202 is predetermined and is often fixed based on hardware limitations. For example, a processing unit 202 may have a threshold number of warps, i.e., a maximum number of warps, equal to about 48 warps. Depending on the type of work being carried out by a processing unit 202, and other factors such as the register availability or programmer choices, the practical number of warps utilised by the processing unit 202 may be lower than the threshold number of warps. In some cases, using or launching 48 warps simultaneously may overload resources and cause an overall slowdown. Thus, during some processing tasks, only 36 warps may be available for use in practice by a processing unit 202. Each warp comprises a predetermined number of threads. For example, the number of threads may be 32 per warp. In many of the presently-disclosed examples, the number of threads per warp is 128, though this is merely exemplary.

Generally speaking, the storage capacity of lower-level memory and caches is smaller than higher-level memories/caches. In other words, memories at the top of the memory hierarchy have greater capacity than memories/caches at the lower end of the hierarchy. Memories at the lower end of the hierarchy are closer to the processing unit 202 and threads, meaning that memories/caches at the lower end of the memory hierarchy generally have a greater access bandwidth by the processing unit. It is therefore advantageous to utilise the lower-level caches as much as possible for operations that require repeated reads and writes. Merely to give representative examples, the storage capacities of the entities in the processing element 102 of figure 2 may be as follows:

| Storage Unit | Capacity |
|---|---|
| local memory (210) | 28 KB |
| L1 cache (204) | 25 KB |
| L2 cache (212) | 1 MB |
| Global memory (108) | > 1GB |

As an example, the overall memory pathway (in terms of data that can be transferred between adjacent storage units) is global memory 108 → L2 cache 212 → L1 cache 204 → processing unit 202 (e.g., registers comprised within, or accessible to, the processing unit 202). In other implementations, there may be other caches. For example, if a processing unit 202 sends a read instruction for some data to its respective L1 cache 204, but that data is not yet stored in the L1 cache, the cache 204 obtains the data from memory higher up the hierarchy such that the next read can happen from the (much faster) L1 cache. The structure of the memory hierarchy illustrated in figure 2 will be referred to in the following description of the presently-disclosed methods.

In general, methods of matrix multiplication in the present disclosure exploit the structure of memory hierarchies by organising matrix data in advantageous ways. Specifically, values and arrays of matrices to be multiplied are allocated to appropriate memory/cache locations to provide at least two advantages:

1) Increase the re-use of matrix multiplication data to thereby reduce the frequency of read/write operations (to global memory, or a higher cache level) to obtain new matrix multiplication data;

2) Store matrix multiplication data in appropriate cache locations to thereby reduce latency associated with reading/writing data.

There are various factors that can influence the frequency and latency associated with read/writes of matrix data. What characterises an 'appropriate' cache can depend on, for example, the type of matrix data, and the processing unit and/or warp allocated to processing the matrix multiplication data. Generally, the barrier to achieving the above two advantages is that significant amounts of matrix data must be read during matrix multiplication, and reads to memory are slow (compared to the reading and processing speeds of registers associated with threads). The time spent in making caches coherent, and reading/writing new data to on-chip memory, is therefore a bottleneck that limits the maximum speedup that can be achieved through parallelisation. Methods of organising matrix multiplication data to make good use of on-chip memory resources, and thus achieve the above two advantages, is an objective of the present disclosure. Generally, the methods which pertain to organising data handled by multiple workgroups are referred to inter-workgroup organisation methods.

Inter-workgroup organisation

It can be convenient to organise matrices into arrays in order to facilitate the multiplication of said matrices. The matrices described herein may represent actual matrix data or may be formed of a plurality of linear arrays that are more conveniently stored and treated as matrices. The term linear array is used in the disclosure to refer to a one-dimensional array. For example, a linear array can represent a column of size [nx1] or a row of size [1xn], or even an unstructured list of values. The matrix data may represent texture data, activations, or weight values. Some of the matrices to be multiplied may be very large, e.g., having thousands of values in each dimension (e.g., a 1000x1000 matrix), or more. Therefore, some matrices cannot be stored in their entirety in a single cache/memory. For example, 1000x1000 matrix where each value is 4 B in size would require storage of 4000000 B, i.e. about 4 MB, which is larger than the L2 cache in the example above. Thus, in general, matrix data is partitioned into matrix subunits. It is these subunits that are then multiplied together individually, and after which the results may be combined as appropriate. The organisation of the matrix subunits, their distribution amongst appropriate storage locations, and the choice of dimensions of the subunits forms part of the presently-disclosed methodology.

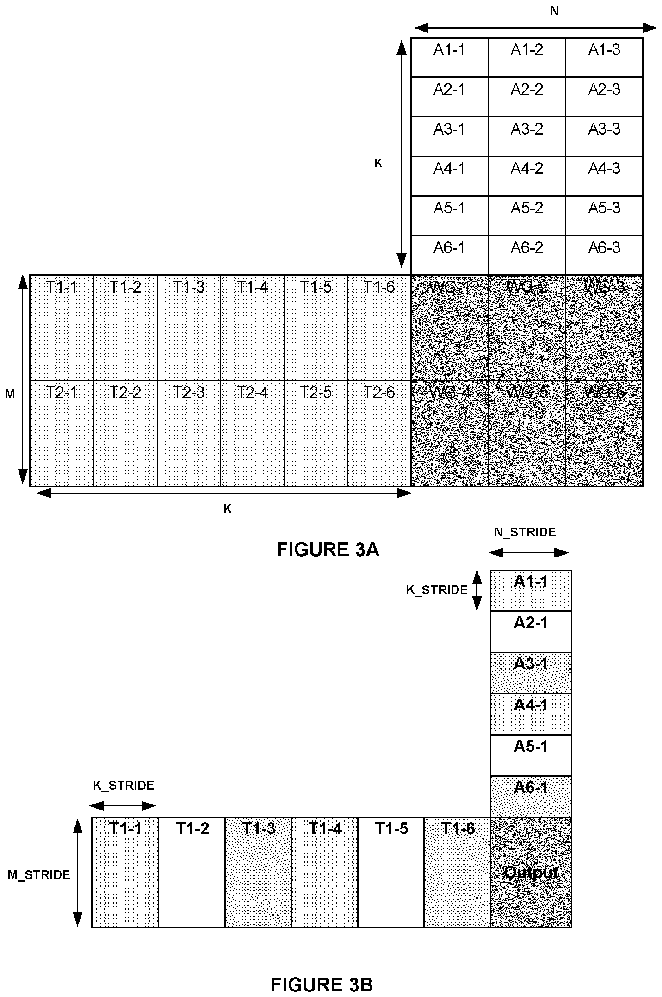

Figure 3A shows an example data organisation of matrix subunits for multiplication according to presently disclosed embodiments. Units with a 'T' prefix represent at least part of a 'first' matrix input, and each individual block with a 'T' prefix represents a subunit of that first matrix input. Units with an 'A' prefix represent part of a 'second' matrix input. The matrix multiplication to be calculated is thus the result of multiplying the first and second matrix inputs together. The first 'T' subunits are arranged with commensurate dimensions to the second 'A' set of sub-units. Thus, each row of T subunits is arranged to be multiplied with each column of A subunits. For example, each subunit in the first row, T1-1 to T1-6, is intended to be multiplied with each respective subunit in the first column of 'A' sub-units, A1-1 to A6-1, and summed/accumulated into the WG-1 output subunit as follows: WG-1 = (T1-1 x A1-1) + (T1-2 x A2-1) + (T1-3 x A3-1) +(T1-4 x A4-1) + (T1-5 x A5-1) + (T1-6 x A6-1). The overall dimensions of the first matrix input are M rows by K columns. The overall dimensions of the second matrix input are K rows by N columns. The shaded blocks labelled WG-1 to WG-6 represent the output grid formed on output matrix subunits.

The same method of illustrating the data organisation is used throughout the present disclosure, i.e., the data to the left of the output grid is deemed the first input data and the data lying above the output grid is deemed second input data. Matrix multiplication is non-commutative, so $A \times B \neq B \times A$. Consequently, the nomenclature of 'first' and 'second' input usually carries the meaning that the first input data is deemed as the first matrix in the multiplication order (though not necessarily, since first matrix data and second matrix data are interchangeable by the following transpose equation: $A \times B = (B^T \times A^T)^T$. The type of data represented by first and second matrices is not fixed. Any suitable data types that can be multiplied can be deemed first and second data.

The shaded units adjacent to the first and second inputs, labelled WG-1 to WG-6, represent the output, but also the workgroups allocated to each output subunit. For example, WG-1 is configured to store the result of the multiplication and subsequent accumulation of row {T1-1 to T1-6} of first input multiplied by {A1-1 to A6-1} of the second input. Moreover, each output grid is arranged to accumulate the results of multiplications between pairs of sub-units. The overall dimension of the output grid is M rows by N columns. Moreover, each output sub-unit is intended to be handled by its own respective workgroup (comprising one or more warp of threads). Thus, workgroup WG-1 handles the multiplication of {T1-1 to T1-6} with {A1-1 to A6-1}, workgroup WG-2 handles the multiplication of {T1-1 to T1-6} with {A1-2 to A6-2}, and workgroup WG-3 handles the multiplication of {T1-1 to T1-6} with {A1-3 to A6-3}. Workgroups WG-4, WG-5, and WG-6 thus handle the multiplication of {T2-1 to T2-6} with each respective column of second input data. The workgroups of an output grid may belong to the same or different processing units 202: both of these possibilities are described in detail in the present disclosure.

Figure 3B illustrates the dimensions of each sub-unit. Each first, T, sub-unit is configured to be multiplied with a respective second, A, sub-unit. Therefore, each T sub-unit has M_STRIDE rows ($M_s$ in short) and K_STRIDE columns ($K_s$ in short). Each A sub-unit has K_STRIDE rows and N_STRIDE columns ($N_s$ in short). For example, in figure 3A, $K = 6*K_s$. The sub-units have been shaded to aid understanding of which first input sub-units are intended to be multiplied with which respective second input sub-units. Specifically, T1-1 is to be multiplied with A1-1, T1-2 is to be multiplied with A2-1, T1-3 is to be multiplied with A3-1, T1-4 is to be multiplied with A4-1 and so on. The threads comprised in workgroup WG-1 are intended to handle each of these multiplications and to accumulate the results for the next multiplication. Each output sub-unit therefore has M_STRIDE rows and N_STRIDE columns. Each output sub-unit is arranged to accumulate values for each pair-wise multiplication of respective pairs of first and second sub-units. For example, WG-1 stores the result of the multiplication of T1-1 and A1-1. The result of the multiplication of T1-2 X A2-1 is then added to the result of T1-1 X A1-1, and so on.

In some examples, the first input data will be read as texture data. More generally, the first input data may be produced on-the-fly by some other process, and therefore there may be a high turnover of the first input data. The second input 'A' matrix data may represent a weighting to be applied to the first input data. The second input values may generally be static and thus may be stored longer-term, and re-used to a greater degree, than the first input data. It will be appreciated, based on the arrangement of data illustrated in figure 3A, that first and second input data needs to be read by more than one workgroup more than once. It would therefore be advantageous for these reads to be fast since they are repeated often.

Furthermore, the first input data may need to be replaced frequently, and more often than the second input data needs to be replaced. It would therefore be advantageous for the storage and organisation of the first input subunits to satisfy at least some of the following conditions:

i. High re-use of the first input subunits. Specifically, the first input subunits, and the workgroups configured to access the first input subunits, are organised such that as much re-use of the first input subunits can be made before it is necessary to replace the first input subunits.

ii. Fast retrieval of first input subunits. Thus, the retrieval, by threads, of first input subunits from its storage location should be fast.

iii. The bandwidth between the storage location (e.g., a cache) of the first input subunits and the external storage (e.g., a texture store) of the first input data should be high, to thereby allow fast loading of new first input data.

It should be appreciated that satisfaction of the above conditions is optional, though advantageous, for the operation of the presently-disclosed invention. Nevertheless, the above conditions motivate the choice of storage location for the respective matrix inputs. The diagram of figures 3A and 3B represent a logical grouping of first-input subunits, thread-groups (i.e., workgroups), and second input data. Generally (though not exclusively), each workgroup (WG-1, WG-2, etc) is configured to access the first input belonging to the same row as the workgroup, and is configured to access the second input belonging to the same column as the workgroup. For example, workgroup WG-5 is arranged primarily to access first input data {T2-1 to T2-6}, and to access second input data {A1-2 to A6-2}. Consequently, the logical arrangement of matrix data for a set of input may be used to inform which memory unit/partition should store each sub-unit of matrix data.

Generally, the first input data (the 'T' sub-units) is stored in an L1 cache 204 dedicated to a processing unit 202. The second input data ('A' sub-units) is generally stored in the local memory 210 dedicated to a processing unit 202. For a given workgroup, the dedicated L1 cache 204 and local memory will belong to the same processing unit. For example, if WG-1 belonged to processing unit 202-1 in figure 2, L1 cache L1-1 (204-1) would be used to store at least {T1-1 to T1-6} (not necessarily all at once), and local memory LM-1 (210-1) would be used to store at least {A1-1 to A6-1} (not necessarily all at once). The L1 cache holds a relatively small amount of data (e.g., about 24 KB), and a workgroup can only access the L1 cache 204 associated with the processing unit to which it belongs. However, the retrieval speed from an L1 cache 204 is fast relative to read/write speed to higher level memories, e.g., the L2 cache 212. Therefore, the L1 cache represents a useful storage location for input 1 data because it satisfies advantage ii) above. Moreover, the write-speed to L1 cache from an external memory is relatively fast (compared to write speed to local memory from external memory). The use of L1 cache to store input 1 data thus satisfies advantage iii) above, since input 1 data e.g., texture-type data, may need to be frequently re-cached. In one specific example, each L1 cache 204 may have two 256-bit bus lanes defining a dedicated pathway between the L1 cache and the L2 cache 212.

The local memory 210 of each processing unit 202 is generally lower down the memory hierarchy, meaning that it provides fast read speeds by threads of the processing units, but cannot re-load data (e.g., from higher level memory) at the same rate as an L1 cache 204. Therefore, local memory is well-suited to storing input 2 data which is more constant over time (e.g., static weights, which are re-used more frequently and therefore are re-loaded less frequently than the first-input data). Another advantage of storing second input data in local memory, as explained in more detail below, is that each thread can access values of local memory 210 at a relatively high bandwidth; in some cases, up to 16B in one go (which, for 4B values, corresponds to four second-input values at a time).

The output data (WG-1 to WG-6), on the other hand, does not need to be re-read frequently. The output data may only be read once, i.e., when it has accumulated the result of a matrix multiplication. Workgroups send write-instructions to the output sub-units. However, the latency with which the writes take place should not affect the ongoing processing of a workgroup. During the processing of an output-subunit at a workgroup the output-subunit values are stored and accumulated in registers. Once computation of the output sub-unit is complete, the output sub-unit can be transferred to external memory such as global memory: thus, output data sub-units (WG-1, WG-2, etc) can be finally stored in distant memory with higher latency since, once computed, it need not be re-used. Generally, the output sub-units are ultimately stored in global memory. For example, once the relevant register banks available to threads have accumulated the result of a matrix multiplication, the registers may transfer their data to the global memory.

In summary, the first input 'T' data is re-read by workgroups multiple times, and generally forms part of a larger matrix input (than the overall second input). It is therefore beneficial to store the first input in a cache storage which threads can access with low latency in order to service the frequent re-reading requirement. The first input data is also frequently overwritten in the cache. Thus, it is also advantageous to store first input data in a cache that is proximate to higher-level memories which store the remainder of the first input data and which can be accessed by the cache with low latency. The second 'A' input must also be re-read with high frequency by threads, but is overwritten far less frequently. Consequently, it is beneficial to store the second input in storage which is accessible by threads at low latency.

Separately to the storage location of the different types of data, the logical organisation of the first and second inputs, and the output sub-units with their respective workgroups, affects the efficiency of the matrix multiplication. The general aim is to allocate workgroups amongst the different processing units such that the first input data stored in L1 caches dedicated to those processing units can be re-used to the greatest extent possible (advantage i) above). This is especially advantageous for convolution operations, which involve a very high reuse of the L1 cache activation data. In other words, once data is stored in an L1 cache of a processing unit, workgroups of threads are organised to exhaust that data (i.e., with as many sub-units of second data as possible) before new first input data needs to be loaded into the L1 cache. Processing units have one dedicated L1 cache, therefore workgroups within the processing units share access to the same L1 cache.

Referring to Figure 3A, it is therefore beneficial to ensure that each logical row of first input subunits and output sub-units relate to the same processing unit. For example, T1-1 to T1-6 may be allocated to the same L1 cache (say, L1-1 in figure 2, dedicated to PU-1), and workgroups WG-1, WG-2, and WG-3 may be launched from PU-1 to handle that first input data. All of the second input data (A1 to A18) is thus allocated to the local memory, LM-1, of PU-1. This has the result that each workgroup of PU-1 makes use of the same L1 cache, L1-1, when performing the matrix multiplication. Each sub-unit in this row of first input data {T1-1 to T1-6} is thus re-used a plurality of times; specifically, the frequency of re-use is equal to the number of workgroups launched from PU-1 in the logical row of output subunits. Only three are shown here, though as many as 24, 36, or even 48 warps of thread may re-use each first input sub-unit. Ideally, new first input subunits are loaded only after all of the first input sub-units have been used. However, in some examples, a new first input might be stored ahead of time so that it is in place before moving to the next input, to reduce latency.

It should be appreciated that the first row of first input data {T1-1 to T1-6} need not be stored or accessed simultaneously in the L1 cache. It should therefore be appreciated that the diagram of figure 3A represents a logical allocation of data, and not necessarily a true representation of what data is stored simultaneously. Given that the L1 cache is limited to about 24 KB, if a first input sub-unit comprises 4 KB of data, at most 6 sub-unit blocks can be held in L1 cache at a time. The number of blocks that can be stored in a cache defines a "cache window". The cache window can be any suitable dimension. In one example, each 'row' of workgroups may belong to a different processing unit. Taking figure 3A, the first row comprising first input data T1(1-6) and WG (1-3) may be associated with PU-1, and WG (4-6) may be associated with PU-2. Thus, the six subunits T1(1-6) are stored in L1-1, and all of the second data (A1-1 to A6-3) is stored in local memory LM-1. All of the second data (A1-1 to A6-3) will also be stored in the local memory of a second processing unit, say LM-2 of PU-2. The cache window in this example is a 6-sub-unit row of 'T' input data which, once multiplied with the relevant second input data, can be overwritten with new data. It should nevertheless be appreciated that, because the 6 blocks of first input data fit into the cache, no cache eviction needs to take place during the multiplication process. The first input data in the cache will be overwritten only when use of the first input data has been exhausted. The benefit is that no waiting time is introduced for cache reads, because all the input data needed by the workgroups is pre-stored in low-latency memory/cache.

In another example, each of WG-1 to WG-6 may belong to the same processing unit. Thus, both rows of the 'T' input shown in figure 3A may be allocated to the same L1 cache. This can still be handled efficiently, however, since not all of the first input needs to be accessed simultaneously. Thus, both rows do not need to be stored at the same time. In this example, it is more efficient to define the cache window as a 2x3 window. For example, assuming that one 'T' sub-unit is 4 KB in size, T1-1, T1-2, T1-3, T2-1, T2-2, and T2-3 may be stored initially in the same L1 cache (e.g., L1-1), thus filing the L1 cache L1-1. Once all 6 workgroups (WG-1 to WG-6) have performed their multiplications with this group of first input data, which can occur concurrently, at least some cache data is evicted in order to allow for new cache data to be loaded. In one example, the cache window could shift 3 blocks to the right and stores the remaining 'T' input data (T1(4-6) and T2(4-6)). In a more practical example, the cache evicts the least-recently used data: thus, the T1-1 block could be evicted and overwritten with the next block in the 'queue': the T1-4 block. Consequently, data stored in both the cache and the local memory of a processing unit still benefit from significant re-use. Indeed, the second input data benefits from greater re-use than the first example, because all 18 blocks, A1-1 to A6-3, can be stored in the local memory of a single processing unit, rather than copied across two processing units. Generally, an objective is to ensure that the number of subunits that should be stored (based on the logical allocation) in an L1 cache does not exceed cache window. In a hypothetical example where a plurality of workgroups accesses more sub-units of first input data than can fit in the cache window of an L1 cache, the L1 cache would have to repeatedly re-cache data. This could lead to an overall slowdown because certain workgroups could be forced to wait for their data to be re-cached in the L1 cache.

In addition to the high-level organisation of matrix data and workgroups, the dimensions of the sub-units themselves impact the storage efficiency of the on-chip memory, and thus the overall performance. It is therefore also an objective of the presently disclosed methods to determine efficient dimensions for both the first and second sub-units based on the constraints of the multi-threaded system. These constraints may include one or more of: L1 cache capacity, local memory capacity, the number of workgroups or warps available per processing unit, and the number of threads per workgroup/warp. The number of workgroups or warps available per processing unit may generally be referred to as the 'occupancy' of a processing unit.

Figure 3B shows the dimensions of each sub-unit: $M_s$, $K_s$, and $N_s$. The sub-units are shaded to indicate which first-unit is configured to be multiplied with which corresponding second input sub-unit. Each first input sub-unit block is [$M_s$ x $K_s$] in size, and each second input sub-unit block is [$K_s$ x $N_s$] in size. The choice of dimension can be derived from the constraints of the multi-threaded system as follows. For the purposes of this example, the constraints of the multi-threaded system are as follows:

| System | Constraint |
|---|---|
| Value size | **C** Bytes |
| local memory (210) | Capacity = $LM_{total}$ KB |
| L1 cache (204) | Capacity = **T** KB |
| Workgroup | Predetermined number of threads = 128 |
| Processing unit | Target occupancy = **O** (number of warps capable of running simultaneously on a USC) |
| Processing unit | Register availability per thread = $R_{PU}$ (approximately the number of registers used by the WG for book-keeping and other overhead) |

For the sake of simplicity, it is presumed in this example that a workgroup comprises exactly 1 warp, and that a warp comprises 128 threads. However, in general warps may have other numbers of threads, and workgroups may be formed of more than one warp. These constraints define the following restrictions:

i. Each processing unit can operate at most O warps (and fewer warps than O can result in lower utilisation; thus O can be considered a target occupancy in order to achieve good utilisation, as well as defining a practical limit);
ii. each processing unit has access to exactly one dedicated L1 cache, and one local memory;
iii. the amount of first input data that can be stored at a time is T KB, and the amount of second input data that can be stored at a time is $LM_{total}$ KB.

The amount of local memory is used to determine $K_s$, and $N_s$. Each warp uses a certain amount of memory from the local memory, therefore the threshold amount of second input data that can be serviced by O workgroups is determined as $\frac{LM_{total}}{O}$. This is the amount of local memory data (e.g., second input data) that can be serviced by one warp at a time. Dividing this by the size of each data value, **C,** gives the number of matrix values that are effectively serviceable by one warp at a time:

$$\frac{LM_{total}}{C \times O} = A_{subunit}$$

where $K_s$ and $N_s$ should be chosen to satisfy: $K_s \times N_s \leq A_{subunit}$. Another representation of this condition is:

$$K_S \times N_S \leq \frac{LM_{total}}{C \times O}$$

In other words, the dimensions of the second input subunits to be stored in local memory are subject to the constraint that the total number of second input sub-units comprise no more values than can be processed by the number of available warps. Put another way, each of the O warps can handle at most a $K_s \times N_s \times C$ bytes of data from the second input at a time in order not to overload the local memory of the processing unit.

Another potential constraint is that the allocation of local memory per warp is non-overlapping (though the allocation is generally under programmer control and so is not fixed). For example, the allocation of local memory per warp may be 512 B per warp. Because each warp has a non-overlapping allocation in local memory, the total amount of second input data stored in local memory should also not exceed $K_s \times N_s \times C \times O$. Furthermore, the amount of data in each second input sub-unit, i.e., $K_s \times N_s \times C$, should not exceed the maximum local memory allocation per warp (e.g., 512 B).

In some examples, a register-based constraint that should be satisfied is:

$$(K_s + N_s + R_{WG}) \times O < 1024$$

This constraint pertains to the first input data. $R_{WG}$ is a compiler-dependent overhead of miscellaneous register allocation. For example, the value of $R_{WG}$ is representative of the fact that registers are needed to store pointers, index counters, other partial results, and the like. Thus, generally, $R_{WG}$ is representative of an excess number of registers used by each workgroup. Registers can be defined as excess, for example, by virtue of the fact that they are used for purposes other than storing the first input and the output. A more general representation of this constraint is:

$$K_S + N_S + R_{WG} \leq \frac{R_{PU}}{O}$$

where $R_{PU}$ register availability of the processing unit. More specifically, $R_{PU}$ represents the number of registers that get split across all warps active in a processing unit. Thus, in a sense this represents the number of registers per thread. For example, if a programmer wished to launch 24 workgroups/warps such that O = 24, and $R_{PU}$ = 1024, at most 1024/24 = 42 registers would be available in each warp. Thus, the programmer would also need to select $K_S$ and $N_S$ so that $K_S + N_S \leq 42 - R_{WG}$. $R_{PU}$ = 1024 only in some examples, e.g., where the total storage for registers is 512 KB and each warp has 128 threads, resulting in 512/128 KB per thread = 4KB. Since each register has a capacity of 4 bytes in this example, the result is 4 KB / 4 = 1024 registers per thread. It will be understood that this is merely an example, and a different amount of registers storage other than 512 KB may be available.

The dimensions of the first input sub-units are thus already derived to an extent, because $K_s$ is determined based on local memory constraints. The other dimension of the first sub-units, $M_s$, i.e., the number of rows, is generally selected to be an integer multiple of the number of threads as $M_s = 128N$, where $N \geq 1$ and an integer. It is convenient in many cases to set $M_s$ equal to the number of predetermined threads, i.e., in this case exactly 128. In this way, one thread can handle the multiplication operations for each row of the first input data. Although the constraints described here limit how large these values should be, it should be appreciated that it is usually beneficial to select values to be as large as possible whilst still satisfying the constraints. In this way, the constraints in effect represent target values as well as limits.

Once the dimensions of the first and second input data have been determined, the workgroups can be allocated to respective cache locations and local memory locations of the appropriate processing unit, e.g., as shown in figure 3A. It should be appreciated that a condensed number of warps is shown in figure 3A for simplicity. Generally, an objective may be to allocate as many workgroups as are available to as few rows of cache-stored data as possible. For example, a processing unit having launched 12 warps (of a theoretically possible 48 warp occupancy) may only achieve about 50% utilization. Separately, the number of rows of cache data should be logically arranged such that the number of first data subunits accessed at any one time does not exceed the size of the cache window. As mentioned, if a plurality of workgroups is instructed to read more subunits of data (stored in an L1 cache) than can 'fit' into the cache window of that L1 cache, the cache will be forced to re-load data during processing which would create wait times and cause slowdown. First input data is therefore organized in general such that the number of sub-units in a row does not exceed the cache window of the L1 cache in which the first input data is stored (e.g., for a cache window of 6 sub-units, the number of sub-units of first input data should be less than or equal to 6 rows to preserve high L1 cache utilisation). Further examples are provided in the following disclosure.

Merely to give an example based on the exemplary constraints above, for a target occupancy of O = 32, if local memory is constrained to 28 KB and each L1 cache is constrained to 24 KB, and presuming that each value is 4 B in size, the value of $A_{subunit}$ (the number of matrix values in local memory that are effectively serviceable by one warp at a time) will be: $\frac{28*1024\,B}{32*4\,B} =$ 224. Thus, to satisfy $K_s \times N_s \leq 224$, suitable values would be $K_s$ = 8 and $N_s$ = 16. Where the register constraint of $(K_s + N_s + R_{WG}) \times O < 1024$ applies, for an occupancy of O=32, which yields the further constraint of $K_s + N_s \leq 32 - R_{WG}$, which is again satisfied by the values of $K_s$ = 8 and $N_s$ = 16 as long as $R_{WG} \leq 8$. These values also provide convenient sizes for the first input subunits, because each first sub-unit will then have size 128x8. This equates to a total size of 128x8x4 bytes, i.e., 4096 bytes, or 4 KB. This size of the first input sub-unit provides good cache efficiency since exactly six blocks (of 4 KB each) can be stored in an L1 cache of capacity 24 KB. Although these values are merely exemplary, they are used to demonstrate the advantageous effect of deriving dimensions of matrix sub-units in dependence on physical hardware constraints, in order the efficient and complete utilisation of all available computing resources (i.e., cache bandwidth, caches storage, and thread availability) can be made.

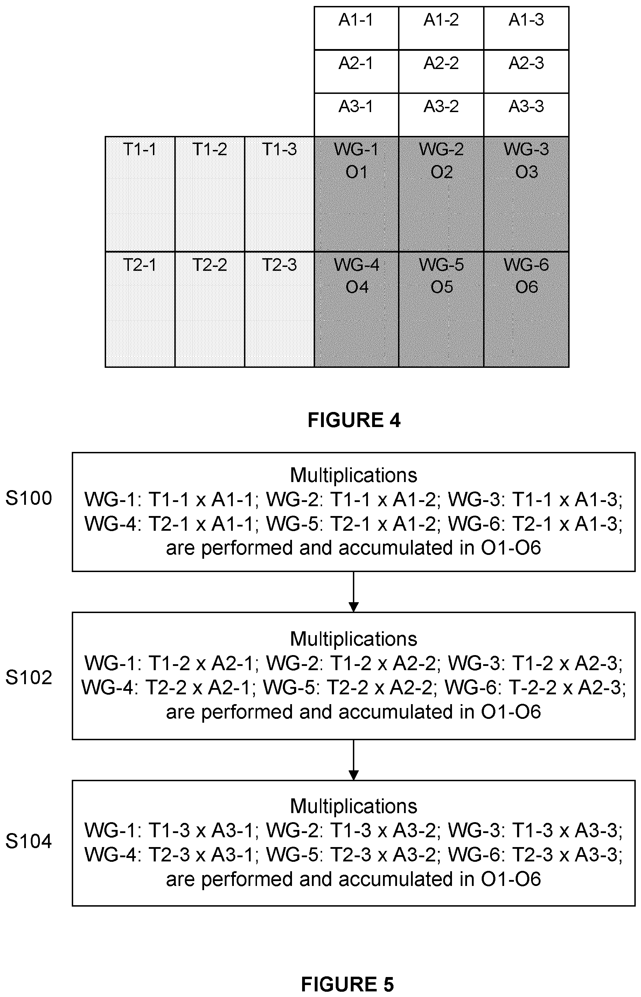

Figure 4 shows an example of matrix data organisation in a multi-threaded system, which is used in conjunction with figure 5 to describe how workgroups operate on the matrix data concurrently. As with figure 3A, each of the output sub-units is configured to store the result of the accumulated multiplications between the first input data of the same row and the second input data of the same column. For example, WG-1 is logically arranged to multiply {T1-1, T1-2, and T1-3} with {A1-1, A2-1, and A3-1} respectively, and to accumulate the results of each of the three respective multiplication operations into output sub-unit O1. WG-5 is configured to multiply {T2-1, T2-2, and T2-3} with {A1-2, A2-2, and A3-2} respectively, and to accumulate the results of each of the three respective multiplication operations into output sub-unit O5.

As before, the first matrix data formed of 'T' sub-units is stored in a dedicated cache, and the second matrix 'A' sub-units are stored in a dedicated local memory. Each of workgroups WG-1 to WG-6 in Figure 4 is deemed to be part of the same processing unit. The constraints of the system are not directly considered for the purposes of this example, and the dimensions of the sub-units are not directly considered for this example. For convenience, each workgroup is considered to comprise a single warp.

Figure 5 shows how a parallelisation scheme may operate over the data to perform and accumulate the matrix multiplication. At a first step S100, all six workgroups (WG-1 to WG-6) operate concurrently on first input data [T1-1, T2-1] and second input data [A1-1, A1-2, A1-3]. Initially, at S100, the values in O1 to O6 are empty (or initialised to zero). The following operations are performed concurrently:

- WG-1: T1-1 xA1-1 + O1 $\rightarrow$ O1;
- WG-2: T1-1 x A1-2 + O2 $\rightarrow$ O2;
- WG-3: T1-1 x A1-3 + O3 $\rightarrow$ O3;
- WG-4: T2-1 x A1-1 + O4 $\rightarrow$ O4;
- WG-5: T2-1 x A1-2 + O5 $\rightarrow$ O5;
- WG-6: T2-1 x A1-3 + O6 $\rightarrow$ O6;

The warps/workgroups do not have to finish each of these multiplications at precisely the same time, though they will finish the computations are approximately the same time. Since none of T1-2, T1-3, T2-2, T2-3 are needed in S100, the cache may not have stored these data yet. Thus, the active cache window could be deemed to be a column of two blocks in this example. In other words, for the purposes of S100 the only 'T' data stored in the cache may be T1-1 and T2-1 After S100 and prior to S102, the cache will load T1-2 and T2-2 (thus possibly evicting currently-stored data). At S102 the warps proceed to perform the following operations concurrently or substantially concurrently:

- WG-1: T1-2 x A2-1 + O1 $\rightarrow$ O1;
- WG-2: T1-2 x A2-2 + O2 $\rightarrow$ O2;
- WG-3: T1-2 x A2-3 + O3 $\rightarrow$ O3;
- WG-4: T2-2 x A2-1 + O4 $\rightarrow$ O4;
- WG-5: T2-2 x A2-2 + O5 $\rightarrow$ O5;
- WG-6: T2-2 x A2-3 + O6 $\rightarrow$ O6;

The warps add the newly calculated values of S102 with the values that were calculated and stored in 01-06 in S100. Although not indicated, processing registers may be used as temporary accumulators before storing the data on 01-06, which is preferably in global memory. After S102 and prior to S104, the cache will load T1-3 and T2-3 (if not already loaded into the cache). At S104 the warps proceed to perform the following operations concurrently or substantially concurrently:

- WG-1: T1-3 x A3-1 + O1 $\rightarrow$ O1;
- WG-2: T1-3 x A3-2 + O2 $\rightarrow$ O2;
- WG-3: T1-3 x A3-3 + O3 $\rightarrow$ O3;
- WG-4: T2-3 x A3-1 + O4 $\rightarrow$ O4;
- WG-5: T2-3 x A3-2 + O5 $\rightarrow$ O5;
- WG-6: T2-3 x A3-3 + O6 $\rightarrow$ O6;

Concurrent operation of warps may be simultaneous. However, in general the warps may not operate strictly at the same time, i.e., they may not be perfectly synchronised. In some examples, each warp may perform its respective operations at different times to other warps, e.g., the warp operation may be interleaved. However, threads within the same warp generally work in lockstep with one another, on different data items. Nevertheless, performance is still good even if warps are not perfectly synchronised because there is a negligible delay associated with warps performing tasks in succession. Delays that can cause a tangible slowdown typically arise from cache incoherence. So, as described in the present examples, it is generally advantageous to ensure that all sub-units of first input data that are accessed at a given time by a collection of active warps fit into the cache associated with those active warps.

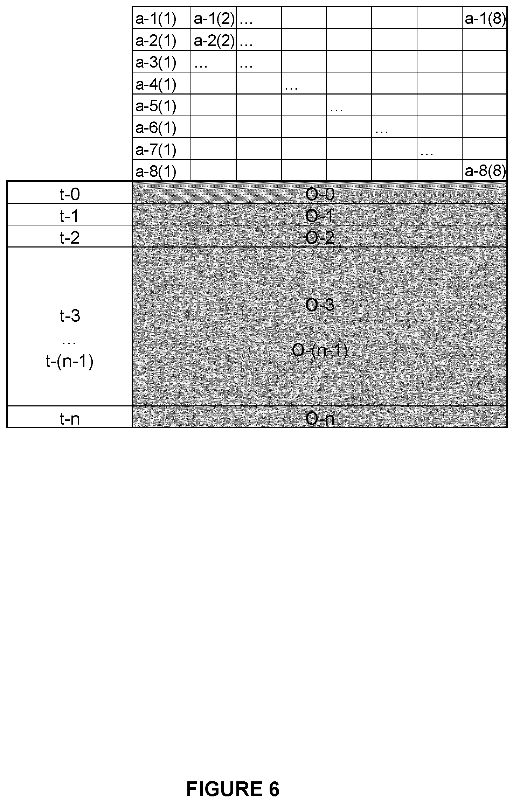

Figure 6 shows a more detailed view of how matrix data is organised at the level of each subunit. Specifically, figure 6 illustrates how threads may be launched to handle the data in respective sub-units. Only two sub-units are shown. The first input sub-unit formed of rows [t-0; t-1;...; t-n] relates to sub-unit T1-1 shown in figure 4. This sub-unit is configured to be stored in a dedicated L1 cache. The second input sub-unit shown is A1-1 as shown in figure 4, and is intended to be stored in dedicated local memory. The values forming the first column of A1-1 are shown as [a-1(1), a-2(1),..., a-8(1)]. For simplicity, the dimension of the second input block is [8x8]; i.e., $K_s$ = 8 and $N_s$ = 8. The row length of each row of the T1-1 sub-unit is also 8. As mentioned, the $M_s$ dimension of the first input sub-unit may be chosen to be an integer multiple of the predetermined number of threads per warp. In this case, let n be the number of threads in a warp. Thus, the warp handling the multiplication of T1-1 and A1-1 can dedicate one thread per row of T1-1. Consequently, each thread of a warp can calculate its own row of output for the multiplication between T1-1 and A1-1.

Rows of the output sub-unit are indicated as [O-0; O-1;...; O-n], one row pet hread of the warp operating on that output sub-unit. The first thread, operating on row O-0, therefore calculates the multiplication between the [1x8] row of t-0 and the first [8x1] column of A1-1 [a-1(1), a-2(1),..., a-8(1)]. The result of this multiplication is a single value and is stored as (or summed with) the first entry in the row of O-0. The second thread, operating on row O-1, calculates the multiplication between the [1x8] row of t-1 and the first [8x1] column of A1-1 [a-1(1), a-2(1),..., a-8(1)]. The multiplications require eight multiplications and seven additions. Each of the n threads in the warp performs this same process on its respective row of T1 to produce entries in the corresponding row of the output sub-unit. Threads belonging to the same warp will generally work in lockstep. It can therefore be seen that the data in A1 is re-used for every thread within the warp. Specifically, each value [a-1(1), a-2(1),..., a-8(1)] is broadcast n times, once per thread. Therefore, for a large n (e.g., 128) the data in A1-1 is potentially re-used significantly more frequently than the data stored in T1-1.

Nevertheless, over the entire warp, the threads of the warp ultimately read 128x8 elements from the first input, and only 8x16 elements from the second input. Thus, the amount of data retrieved from the cache is in this case 8 times greater than the amount of data retrieved from the local memory. The data read from local memory is broadcast so that each value is copied 128 times, though the access of data to the L1 cache occurs at a much higher frequency than for the local memory.

After each of the n threads has produced its entry in the first cell of each row, each thread moves on to the second column of data in A1-1 to calculate the second entry in each row of the output-sub-unit. In other specific examples, described in more detail in the following disclosure, a thread may produce two values for two adjacent cells, in parallel, using fused-multiply add (FMA) functionality. Threads continue to fill cells until each cell of the [nx8] output subunit is filled. Advantageously, by matching the number of threads to the number of rows in the first input subunit, and by ensuring that all the 'active' first input subunit is stored in an L1 cache and thus accessible to each thread, there is no organisational overhead required to parallelise the multiplication since the threads of the warp can execute in lockstep. In this example, the primary cause of latency is simply the delay associated with reading the data from T1-1 and A1-1. However, since threads utilise register banks for performing the reads and multiplications, the latency represents a small part of the compute time. Put another way, only a small proportion of the total execution time is dedicated to non-parallelisable work, meaning that the matrix multiplication scales well with an increasing number of threads.

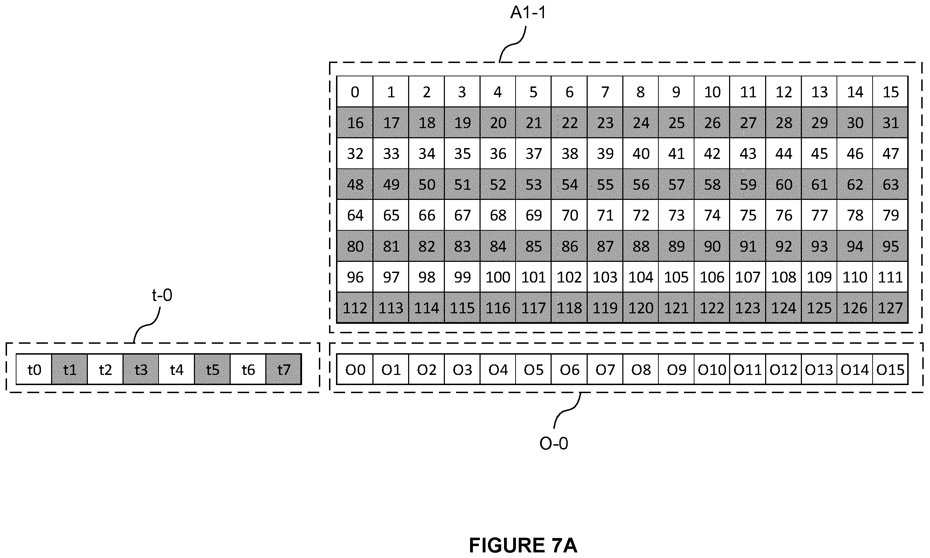

Figure 7A shows another schematic illustrating the data organisation for each value of a second input subunit and the first row of a first input subunit. Again, the data corresponds to the rows and subunits illustrated in Figures 4 and 6. The multiplication of row t-0 proceeds in the manner described above, with the first column of A1-1. The shading serves to assist in identifying which values of t-0 are arranged to be multiplied with which corresponding value of A1-1. For example, t0 is to be multiplied with each of [0, 1, 2, 3,...,15], t1 is to be multiplied with each of [16, 17, 18,...,31], and so on. Furthermore, in the present example, since one thread computes all entries in the first row, one thread is configured to perform all multiplication and accumulation operations associated with the values of t-0 and the values of A1-1. In the present example, this will be 128 multiplications (the number of values in A1-1).

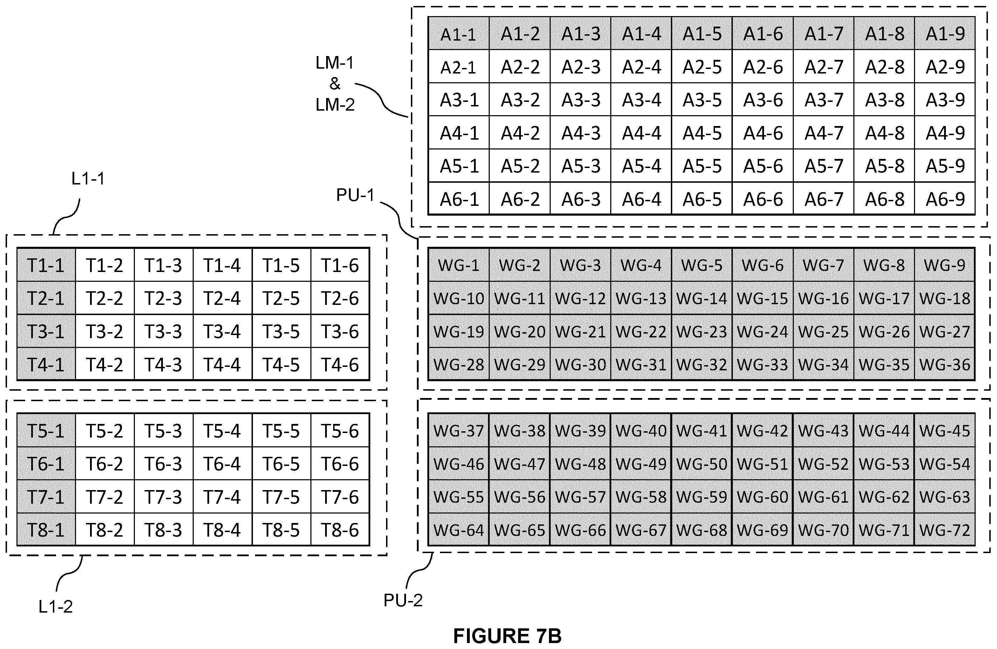

Building on the examples described above, figure 7B illustrates a more complete (though still simplified, for convenience) example of how first and second matrix data can be combined with a collection of warps. This example illustrates the combination of 48 first input sub-units with 56 first input sub-units, using two different processing units each having an occupancy of 36 (i.e., 36 active workgroups). For the purposes of this example, each workgroup comprises exactly one warp of threads. The first block of first input sub-units, i.e. T1(1-6) to T4(1-6), is allocated to one L1 cache, in this case cache L1-1. As with previous figures, the schematic illustrates only logical allocation rather than actual storage location. Although this data is allocated to one cache, that cache does not necessarily store all 24 subunits, T1(1-6) to T4(1-6), at the same time, since not all of the subunits need to be accessed by warps at the same time. The processing unit PU-1 associated with L1-1 services this first block of first input data. Warps WG-1 to WG-36 are launched within PU-1 to carry out this servicing of the first input data stored in L1-1. The entirety of the second input data (all 54 blocks: A1-1 to A6-9) is allocated to the local memory, LM-1, dedicated to processing unit PU-1. Again, not all of the second input may necessarily be stored in local memory at the same time.

The second block of the first input sub-units, i.e., T5(1-6) to T8(1-6), is allocated to another dedicated L1 cache, in this case cache L1-2. The processing unit PU-2 associated with this L1 cache, L1-2, services this second block of first input data, specifically, using warps WG-37 to WG-72. In this example, the same second input data is used (all 54 blocks: A1-1 to A6-9) by PU-2. However, the data is not shared between the local memories of PU-1 and PU-2 because they each have their own dedicated local memory (though PU-1 and PU-2 may both have access to higher level caches). Thus, the local memory (LM-2) dedicated to PU-2 is allocated its own copy of A1 to A6-9. As previously mentioned, the copying of second input data across local memories is unlikely to cause any slowdown, because less data is usually used as the second input data. As with previous examples, each warp calculates one output subunit by multiplying the row of first input data on a common row with the warp with the column of second input data in a common column with the warp. For example, warp WG-36 multiplies first input row T4(1-6) with second input column [A1-9 to A6-9].

For the purposes of this example, the dimensions of the first and second sub-units are taken to be $K_s = 8$, $N_s = 16$, and $M_s = 128$. Thus, each second sub-unit input is [8x16], and each first sub-unit input is [128x8]. Each warp comprises 128 threads (to service one row per sub-unit of first input data). The capacity of the local memories LM-1 and LM-2 is taken to be 28 KB, and the capacity of each of the L1 caches L1-1 and L1-2 is taken to be 24 KB. The size of each value is taken to be 4 B. Thus, the maximum number of sub-units, having dimensions of [8x16], that the local memory can store is

$$\frac{24\ KB}{8 \times 16 \times 4\ B} = 56$$

sub-units. Thus, it is possible for each local memory to store all 54 sub-units, A1-1 to A6-9. In practice, each warp stores only the copy of second input memory that it needs for a given set of multiplications. For example, each of WG-1, WG-10, WG19, and WG-28 (the first column of warps in PU-1) need not store most of the second input, so they may store read only A1-1 into local memory. Once the copy of A1-1 has been used, the next block of second input data, A2-1, may be read into local memory LM-1 to replace A1-1. The size of each first input sub-unit is 8x128x4 B, i.e., 4 KB. The capacity of the L1 cache in this example is 24 KB, so 6 blocks of first input data may be stored in an L1 cache (though fewer than 6 may be stored, as described below).

The shading in figure 7B serves a different purpose to the shading in figure 7A. In 7B, shading illustrates the 'active' data in the subunits, i.e., data that may be stored in cache or local memory at the same time. Similarly, the shading indicates which warps may in principle be concurrently active. Building on the example on figure 4, in this example, in the first step of concurrent matrix multiplication, only the first column of input 1 data [T1-1; T2-1; T3-1; T4-1] may be stored in L1 cache L1-1. Thus, the active cache window (i.e., the window of data being accessed from the cache at any given time) in this example is a 4-length column of sub-units (though in practice the cache may store more data than this). Similarly, only [T5-1; T6-1; T7-1; T8-1] needs to be stored in L1 cache L1-2. In respect of the second input data, only the first row [A1-1, A1-2, A1-3 etc] is active in the first pass. Following the multiplication of the first column [T1-1, T2-1, T3-1, T4-1], a new column of first input data is stored in the cache. It should be appreciated that the ordering shown in figure 7B does not indicate a strict order or multiplication or storage in the L1-1 cache. For example, [T1-1, T2-1, T3-1, T4-1] doesn't need to be followed by column [T1-2, T2-2, T3-2, T4-2]; the ordering of T columns can be arbitrary, thus, the cache could choose to store any arbitrary column of T data next.

Similar to the steps outlined in figure 5, all warps may be active concurrently (indicated by the shading of all output subunits), and may operate to multiply the shaded first input data with the shaded second input data. Taking PU-1 as an example, each of WG-1 to WG-9 will operate on the T1-1 sub-unit and multiply the matrix of T1-1 with the matrices in the first row of second input, i.e., [A1-(1-9)]. The results will be stored in the first row of the output sub-units (though since the results are only partial they will likely reside in registers associated with the warps rather than global memory which is generally used only to store the final result). Concurrently with WG-1 to WG-9, warps WG-10 to WG-18 operate on the T1-2 subunit to multiply the matrix of T1-2 with the matrices in the first row of second input, i.e., [A1-(1-9)].

All 36 warps of each processing unit will operate more or less concurrently and will finish executing at approximately the same time. In this example, it is not possible to store all the first input data in the L1 cache (at most 6 of the total 24 subunits may be stored at a time). Thus, the L1 cache will overwrite the first column with the next column of first input data (for L1-1, this would be [T1-2; T2-2. T3-2; T4-2]). The 36 warps would then proceed to concurrently multiply respective sub-units from this column of first input data with respective sub-units in the second row of second input data (i.e., A2(1-9)). It is further noted that the warps may not be perfectly synchronous, so some warps may finish before others. The active cache window is a column of 4 subunits in this case, meaning that only one subunit of first input data may be available for a given warp at a given time (e.g., T1-1 is available to WG-1, but T1-2 may not be). Thus, in some examples, the non-synchronicity of warps may be exploited in the sense that the first-finishing warp may request a new first input subunit before the other warps have finished processing. To give an example, if each of warps WG-1 to WG-9 finished processing T1-1 before the remaining warps in PU-1, T1-2 could replace T1-1 in the L1-1 cache while other warps finish their multiplications. This is possible because none of warps WG-10 to WG-36 needs access to T1-1. Thus, it is not necessarily a problem if warps become slightly desynchronised, which indeed is another advantage of the present method of organisation. Desynchronisation does not cause problems provided that the warps do not become so out of sync that the requested cached data exceeds the cache window.

As mentioned, it is possible for each local memory to store all 54 sub-units, A1-1 to A6-9. On the other hand, in some embodiments each warp may have a fixed allocation of local memory, and in some cases that allocation is non-overlapping, meaning that it may not be possible for multiple warps to access the same address of local memory. This nevertheless does not necessarily represent a problem because, as indicated by the shading in the first row of the second input data, only the shaded row [A1(1-9)] needs to be concurrently accessed by the warps for the first portion of the matrix multiplication. Thus, one way to organise the data may be to store multiple copies of this first row so that all warps have access to this data. Specifically, local memory may store four copies of [A1(1-9)] such that each of WG-1, WG-10, WG-19, and WG-28 can access A1-1. In practice, preferably each warp stores only one block at a time, and new blocks replace old blocks in the local memory when they are needed. So, for example, each of WG-1, WG-10, WG-19, and WG-28 may only store A1-1 in local memory initially. When these warps move on to multiplying the second column of T data (T1-2, T2-2, T3-2, T4-2) A1-1 would be replaced by A2-1 in local memory.

Figure 7B thus illustrates the advantages of selecting the dimensions of matrix sub-units, and of determining an appropriate organisation of data amongst dedicated on-chip memory, to achieve high utilization of thread resources whilst mitigating the amount of unnecessary cache overwrites. As explained above, the values in each matrix subunit, for both the first and second inputs, are re-used at least twice, and in some cases significantly more than twice. This is achieved by ensuring that a plurality of warps can access the same cache data, and indeed access that same cache data without having to wait for it to be loaded each time. This advantage is achieved so long as the number of subunits of first input data does not exceed the size of the cache window, which in this case is 6 subunits (though the active cache window illustrated is only 4 subunits). Thus, good utilisation of processing resources and a low degree of latency (associated with cache reads) can be achieved with 6 (or fewer) rows of first input data (at least in this case, because the cache window is 6 sub-units). It can be advantageous to use a slightly smaller cache window than theoretically allowed in some cases, e.g., to allow for spare cache storage for other overheads that need processing.

Figure 7B illustrated an example in which each adjacent workgroup was launched within the same processing unit. However, the inventors have identified that it can be advantageous to interleave warps from different (alternating) processing units.

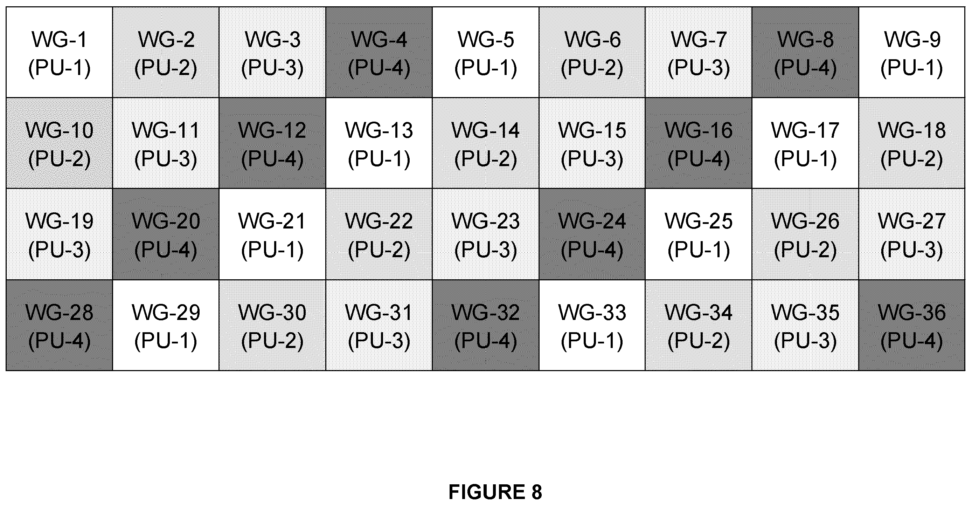

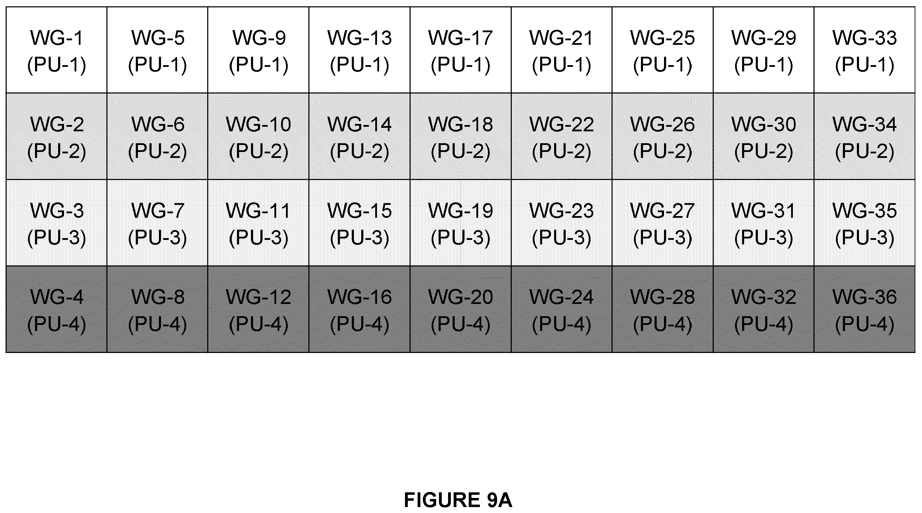

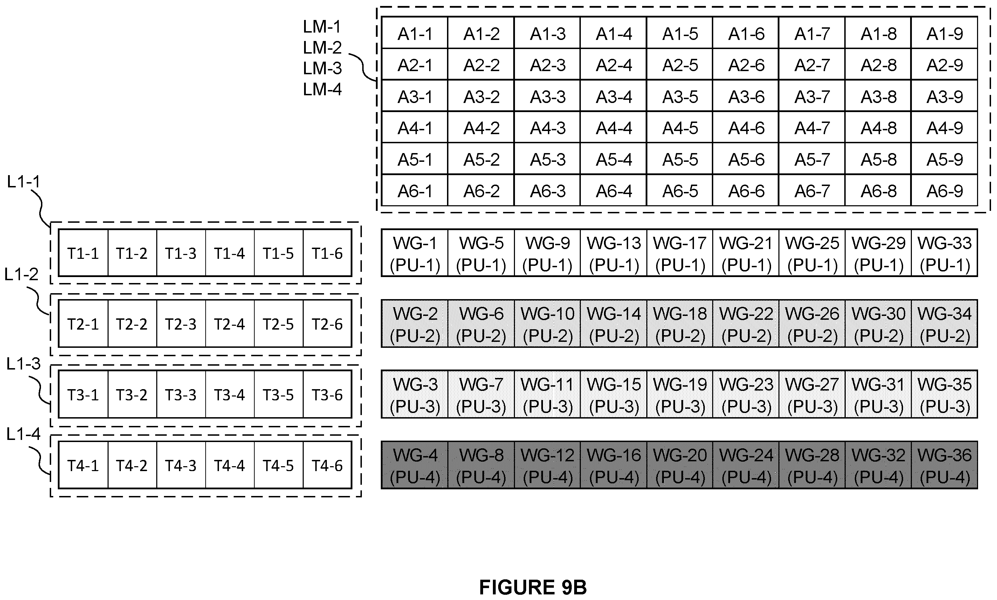

Figure 8 illustrates a block of 36 warps that are launched between 4 different processing units. The example in figure 8 is not intended to show a preferable embodiment, but provides context for the preferable embodiment illustrated in figure 9. In the case of figure 8, referring to figure 2, the processing units are PU-1, PU-2, PU-3, and PU-4. Nine warps are launched from each processing unit. In this demonstrative example, the warps are launched in a round-robin fashion such that warps are launched from successive units in the sequence: PU-1, PU-2, PU-3, and PU-4. This results in a formation where each row of warps contains warps from a mixture of different processing units. As will be described, this arrangement (which for some multi-threaded processors may be the default arrangement that would be obtained after launching warps in a round-robin fashion) does not exploit the optimum bandwidth of the on-chip memory.

Consider the hypothetical situation where the structure in figure 8 is used in the matrix multiplication system of figure 7B. The same four subunits of first input data (T1-1, T2-1, T3-1, T4-1) would be allocated for servicing by all 36 warps. Warps WG-1 to WG-9 would service T1-1 with second input sub-units. However, warps WG-1 to WG-9 belong to different processing units, and therefore do not have access to the same dedicated L1 cache. Consequently, each of the four processing units, PU-1, PU-2, PU-3, and PU-4, would be requested to store T1-1 in their respective L1 caches L1-1, L1-2, L1-3, and L1-4. The same would be true of T2-1, T3-1, and T4-1 for the other three rows of warps. The result is that four L1 caches would each store T1-1, T2-1, T3-1, and T4-1. From a processing perspective this would not cause an immediate slowdown because the cache data would be stored, and the caches would not be overloaded (given that, in this example, there are 4 rows of first-input data, and an L1 cache can store up to 6 blocks of first-input data). However, this storage structure is hugely inefficient since each subunit of first input data is replicated across four different caches. Furthermore, when each warp requests new first input data, each retrieval request will be made to the same external storage location (e.g., a texture store) four times. Those four retrieval requests may be substantially simultaneous. For example, the first input data may be stored in an L2 cache such as L2 212 in figure 2. If each L1 cache of each processing unit attempts to retrieve first input data from the L2 cache, the warp arrangement in figure 8 would cause four lots of the same data to be retrieved from the L2 cache. Therefore, four times as much data will be simultaneously accessed, and the bandwidth of the bus connecting L2 and each L1 cache could be overloaded. Clearly, exceeding the bandwidth of the bus between the L2 cache and the L1 caches would likely cause a slowdown. Moreover, even if exceeding the bandwidth didn't cause a slowdown, making multiple (unnecessary) copies wastes power consumption.

When a warp tries to access data, the data gets copied into the cache no matter where it comes from. So, if a 'row' of warps were assigned to a single processing unit the total amount of data that needs to fit into an L1 cache is significantly reduced, meaning there is less of a chance of having to evict data and reload it later. Thus, to summarise the disadvantage of the figure 8 arrangement, although all 36 WGs could be active in principle, cache efficiency is lost meaning that cache bandwidths may be overwhelmed, and there is a greater chance of having to evict data and reload it later. In practice, cache efficiency is more likely to be lost as a multiplication progresses to later stages because warps can become desynchronised as the 'active' cache window grows and (potentially) exceeds the actual capacity of the cache. It is therefore desirable to avoid the simultaneous accessing of data from higher level memory.

Figure 9A seeks to solve the inefficiencies associated with the default round-robin launching shown in figure 8. In figure 9A, warps are still launched in the round-robin fashion; however, warps are assigned to outputs vertically instead of horizontally. The result, indicated by the shading in figure 9A, is that each row of output subunits is serviced by a collection of warps from the same processing unit. In other words, each row of warps belongs to the same processing unit. For example, warps WG-1, WG-25, WG-9 (and so on, up to WG-33) are launched in the same row and all belong to PU-1. Consequently, the warps in a given row will all be able to access the same L1 cache.

Figure 9B shows how the workgroup arrangement of figure 9A can be used to multiply a set of first matrix sub-units with second input sub-units. In particular, figure 9B elucidates the advantages associated with the vertical round-robin arrangement of workgroups. Since there are four processing units, the second input data (A1-1 to A6-9) is allocated to each of the dedicated local memories, LM-1, LM-2, LM-3, and LM-4. As in figure 9A, each row of output units is serviced by nine warps belonging to the same processing unit. Consequently, each corresponding row of first input data is allocated to the same L1 cache. For example, first input data T1(1-6) is allocated to L1-1, first input data T2(1-6) is allocated to L1-2, and so on. It is assumed in this example that $K_s = 8$, $N_s = 16$, and $M_s = 128$. As before, this results in a potential cache window of 6 sub-units of data for an L1 cache of 24 KB. Thus, advantageously, the entire row of first input data can be stored in - and not merely allocated to - each respective cache.

The warps in figure 9B carry out the matrix multiplication in the same order as described in respect of figures 4, 5, and 7B. Thus, as a first step, all warps will deal with first input data T1-1, T2-1, T3-1, T4-1, and corresponding entries in the first row of second input (A1-(1-9)However, unlike the example in figure 7B in which the warps may have to wait to load the next column of first input data (T1-2; T2-2; T3-2; T4-2), in this case, each of the L1 caches can pre-store all six first input sub-units because the cache window of each L1 cache is six subunits long. This confers the advantage that, at least in principle, the entire block of 24 first input units can be multiplied with the second input data (using the 36 warps across the 4 processing units) without the L1 caches needing to evict and reload data. Furthermore, since the four caches can tolerate a greater cache effective window they can perform a longer computation before reaching a point where the same data could be reloaded multiple times. In summary, the latency associated with cache writing operations and warp wait times is reduced using the configuration in figure 9B. Additionally, it will be appreciated that the configuration in figure 9B entirely avoids unnecessarily duplicated read requests from higher-level memories (e.g., from L2 cache), since only one copy of each first input sub-unit is stored at any given location in an L1 cache.

In order to obtain the organisation shown in figure 9B, some dimensions of the output grid may be predetermined. Referring to figure 3A, the dimensions of the output grid as a whole are M rows by N columns (wherein each output sub-unit has dimensions $M_s$ rows by $N_s$ columns). In figure 9B, as with previous figures, each workgroup block represents one output sub-unit. Thus, to obtain the organisation shown in figure 9B, it is advantageous if M is equal to an integer multiple of the predetermined number of threads per warp. For example, M = 128n (n being a positive integer) where there are 128 threads per warp. M is not necessarily under control of a programmer. Thus, the size of the first input can be artificially padded so that M becomes an integer multiple of 128. Having M equal to an integer number of the predetermined number of threads per warp improves utilisation of each workgroup because each thread is able to work on a corresponding row of each output subunit. The same generally applies to N, since the number of columns is not under programmer control (unless tiling is used, described in more detail below). Thus, N cannot be actively selected unless tiling is used. However, it is advantageous if N is able to satisfy $N = N_s \times O$. For example, where $N_s = 16$, N may range from about 384 to 512 (with intervals of 16), for an occupancy range of 24 warps to 32 warps per processing unit.

Once the appropriate dimensions for the warp collection are determined (e.g., as in the simplified example of figure 9A) in principle it is possible to launch as many warps/workgroups as will fit on the multi-threaded processing platform 100 or GPU 100. In some cases, even the greatest number of warps that can be launched may not be able to multiply a large matrix, since the available registers may not be able to store the accumulators for the entire output matrix. It would not be efficient to 'logically' launch as many warps as would be necessary to calculate the multiplication of large matrices, since doing this would likely result in cache incoherence. Instead, the number of warps launched (in the beneficial arrangement described in figures 9A and 9B) at a given time may be limited in dependence on the physical limits of the multi-threaded processing platform. Subsequently, using the advantageous dimensions derived in figures 9A and 9B, matrix multiplication may be repeated by tiling the large matrix or matrices with the launched warps until the multiplication is completed.

The foregoing disclosure described methods of organising warps and workgroups within processing units and across multiple processing units. Such methods may generally be referred to as inter-workgroup organisation. The inventors have also established that various further advantages can be obtained, independently from the advantages obtainable using the inter-workgroup organization, by organising the matrix data handled by a single warp. These methods of organisation may be referred to as intra-workgroup organisation and are described in respect of the following figures. Although the advantages are independent of one another, they are entirely compatible. Thus, all embodiments of the inter-workgroups organisation methods can be combined with any of the intra-workgroup organisation methods.

Intra-workgroup organisation

Figure 1B shows a register bank accessible by the logic of a processing element. Generally, and in the present disclosure, a register defines a type of storage unit which is very fast to use relative to using cache storage. The processor performing the operations (e.g., a GPU) performs the actual reads and arithmetic operations. However, using registers to store the temporary values. In particular, registers may be characterised in that they can serve as a direct input for arithmetic operations. For example, for the operation c = a x b, a and b can be read from registers and the resulting multiplication can be written to a register c. Typically, each thread has its own storage allocated for its registers, which may be referred to as a register bank. In one example each processing unit (PU) 202 has 512 KB of register space which, for 128 threads, amounts to 4 KB per thread for each PU 202. Each register stores 4 bytes, thus, one thread can have access to 1024 registers, each register handling a 4-byte value. The number of registers-per-thread (1024 in this example) is divided across warps: e.g., 15 warps would result in 1024/15 = 68.26, which rounded down relates to 68 registers per thread, in each warp.

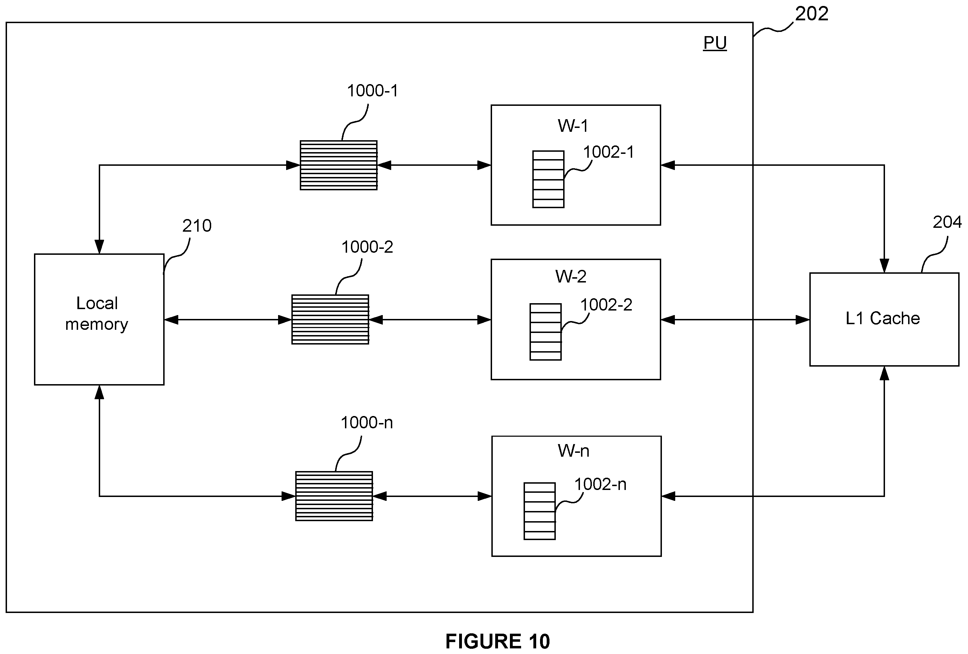

Figure 10 schematically illustrates the capabilities of a processing unit, and in particular illustrates which registers are available to warps within the processing unit. For the purposes of this example, warps rather than workgroups are considered purely for convenience. The dedicated L1 cache 204 and dedicated local memory 210, as illustrated in figure 2, are shown in figure 10. Three warps, labelled W-1, W-2, and W-n, are shown. As with previous examples, the number of warps available within a processing unit can vary. Example numbers of warps include 24, 32, or 48. Each warp W-n has access to a reading register 1000, sometimes called a slot register or a multi-value reading register. Each reading register 1000 is configured to read multiple values from the local memory (in effect) simultaneously. This simultaneous reading capability may be referred to as 'burst read'. The number of values that can be simultaneously read can vary depending on the configuration of the hardware: for example 2, 4, 6, 8, 16 etc values may by simultaneously read as part of a 'burst read' (where, following from previous examples, each value is generally 4 bytes in size). In practice the 'reading register' 1000 may be plurality of individual registers each configured to read one value. For the purposes of this disclosure, since the effect of the 'burst read' is to read multiple values simultaneously, the 'reading register' 1000 or 'slot register' is defined as one entity. Each warp generally has one dedicated slot register (i.e., not shared with other warps). Thus, the number of slot registers generally equals the number of warps comprised within the processing unit.

Indicated within each warp is another register, referred to as a 'processing register' 1002 in this disclosure, or a multi-value processing register. In practice, the 'multi-value processing register' may represent multiple individual processing registers. It should be appreciated that an example set of communication pathways is shown, for illustrative clarity. Other pathways are possible, e.g., directly between the local memory 210 and processing registers 1002. Figure 10 shows only one processing register 1002 per warp merely for brevity. However, each warp contains as many processing registers as there are threads in that warp. For example, a warp which contains 128 threads will contain 128 processing registers (or, 256 processing registers that can each process one value, in the case where two processing registers are allocated to each thread). As described in more detail below, the processing registers generally accumulate values that result from multiplying data from standard registers and slot register 1000 .In the following examples, the slot register 1000 reads second matrix input values. The first-input data is read, from L1 cache, to 'standard' registers, is multiplied with the values held in the slot registers read from local memory, and the result is accumulated in a processing register 1002s. The values read by the slot register 1000 may then be broadcast as many times as necessary by the threads in each warp. For example, referring to the diagram of figure 6, the first column of A1 (a-1(1), a-2(1), a-3(1) and so on) is broadcast n times for multiplication with each row of the first input data (t-0, t-1, etc). Referring back to figure 10, the values read by the slot register are broadcast, once for each thread. The broadcast values (i.e., a second input value) are then multiplied by each respective thread within the warp with a first input value and accumulated in the fast processing register. More detail on the possible use of registers for performing the multiplication operations is provided below.

Generally, the number of registers a warp uses is not fixed but depends on factors such as compiler optimisations and/or some programming choices. Since the register use varies, and since occupancy is defined in part by register use, the occupancy of a processing unit varies in the range of about 24 warps to 32 warps, for matrix multiplication. The number of values read by the slot register 1000 and the number of values read by the processing register can vary: figure 10 is not intended to indicate a specific number of registers/values. Nevertheless, the present disclosure considers advantageous ways of utilizing registers when the capacity of the slot registers 1000 is not equal to the capacity processing registers. In particular, present embodiments disclose methods of multiplying values when the ratio of slot register capacity to processing register capacity is 2:1 (i.e., the slot register 1000 associated with each warp can store twice as many values as the processing register 1002 associated with each thread in the warp).

The objective of the presently disclosed intra-workgroup organisation methods is to multiply two matrices in a reduced number of clock cycles purely by re-organising the data, and not using any additional processing resources. In other words, advantageously, the size of $p$ in Amdahl's law (representing the ability to scale an algorithm by parallelisation) is increased without altering the nature or number of hardware resources in any way. In order to achieve this, the inventors have established ways of allocating and organising matrix data in such a way that is adapted to the particular size and configuration of available registers. In this example, the number of values that can be 'burst read' by the slot registers is twice as great as the number of values that can be held in each processing register. The non-commensurate register capacities can cause delays if the matrix data is loaded into the registers in an efficient way. Thus, the matrix data is preferably adapted to mitigate inefficiencies arising from non-commensurate registers.

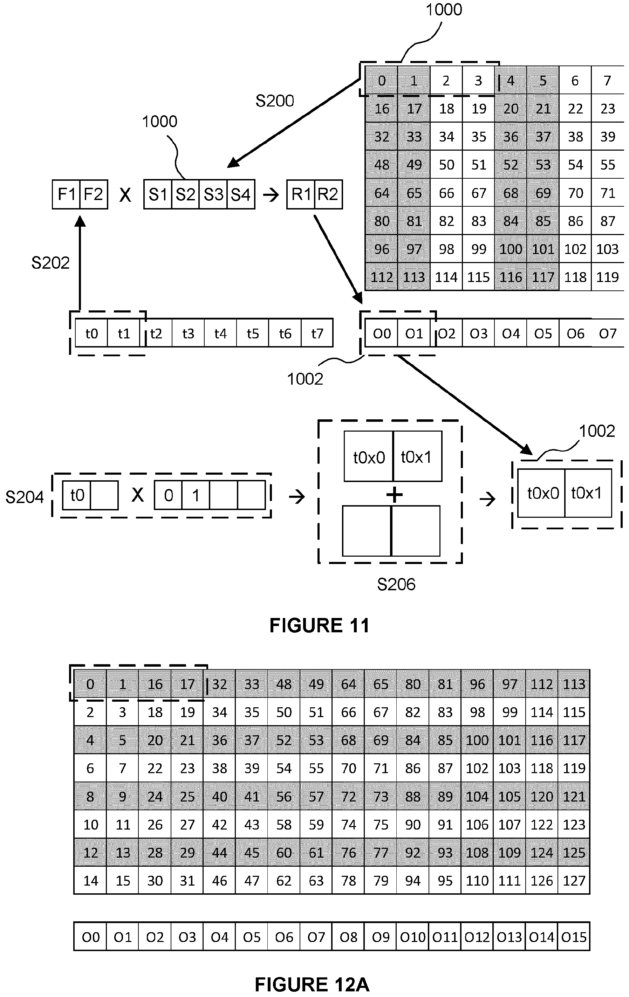

Figure 11 illustrates the potential consequences of not adapting the matrix data for non-commensurate registers. This hypothetical example is described to put the advantages of the more preferred method of using registers into context. A feature of the slot registers, for the purposes of this disclosure, is that they read horizontally contiguous values. In this case, those horizontally contiguous values are read from a dedicated local memory of a processing unit. Figure 11 shows an 8x8 portion of a second matrix subunit (the subunit has dimensions 16x8, i.e., $K_s = 8$, $N_s = 16$, though only half of the subunit is shown for brevity). The portion of second data shown in figure 11 is shown in full in figure 7A. A slot register 1000 is indicated as reading the first four values of the first row of the second subunit from the local memory, i.e., values [0, 1, 2, 3]. In practice, the values stored in the slot register [0, 1, 2, 3] are read once by the warp and broadcast for use by each of the threads within the warp. The problem is that only 't0' from the first input is usable for multiplying with values [0, 1, 2, 3]. Furthermore, the processing register 1002 has only two spaces available, thus, the multiplications of 't0 x 2' and 't0 x 3' cannot be accumulated and so would be wasted if computed (or, they would have to be stored in slower, 'standard' registers, which would decrease performance). Thus, there is no efficient way to utilise values [2, 3] read by the slot registers with the current arrangement.

The processing registers enable the threads to perform certain processing operations faster than 'ordinary' registers. In particular, the processing registers in the present disclosure are particularly suited for accumulating products in an efficient manner. Thus, as indicated in figure 11, the processing registers 1002 are arranged to accumulate the temporary results in output cells O0 and O1. Specifically, threads are capable of performing a single operation called a multiply-add, otherwise called a fused multiply-add (FMA). The FMA is a single operation but comprises both a multiplication and an addition: $c \leftarrow (a \times b) + c$. This expression may be calculated at the precision available within the processing thread before optionally being rounded to the target data type (e.g., 32-bit float) within each cell of the register. In a practical example in respect of the present embodiments, threads can use registers to perform a FMA as follows:

i. *a* may represent a 'first input' value (such as t0 in figure 11) and may be read into a standard register by a thread;

ii. *b* may represent a 'second input' value (such as '0' or '1' in figure 11) and may be read into a slot register by a thread;

iii. *c* may be stored in the fast 'processing register' 1002, and represents a running total (e.g., the temporary value in an output cell such as O0 in figure 11)

iv. $a \times b$ is performed, and the result is added to the value of c stored in the processing register 1002 by the thread.

It should be appreciated that the operation of the multiplication, addition, and optional rounding happen, in effect, at the same time, and may be considered a unified operation (at least from the perspective of each thread). In this example, there are 128 threads, each capable of outputting the result of 1 FMA per clock cycle (provided that a new FMA is added to the pipeline each clock cycle).

Step S200 indicated by an arrow shows, as a first step, a slot register 1000 reading values [0, 1, 2, 3] from a local memory dedicated to the processing unit that comprises the slot register 1000. Spaces in the slot register are denoted S1, S2, S3, S4. At step S202, a thread reads the first two values [t0, t1], held in 'standard' registers (having been retrieved from the L1 cache previously), corresponding to a row within a first matrix sub-unit. The standard register spaces in which [t0, t1] are stored are denoted F1, F2 in figure 11. As can be seen in figure 11, the 1x2 array formed by F1 and F2 (held in standard registers) is not compatible with the 1x4 array formed by S1, S2, S3, S4, held in the slot register 1000, since a 1x2 vector cannot be multiplied with a 1x4 vector using matrix multiplication. Mathematically, only the value stored in F1 (i.e., t0) is compatible with the first row of the matrix data. Thus, in this hypothetical example, only value [t0] would ultimately be useable with the second-input data stored in the sot register. The problem is further compounded by the fact that there are only two output registers to accumulate the results (O0 and O1, i.e., the 'fast' processing registers 1002). Thus, in this hypothetical example, t0 can only be multiplied together with [0, 1] to produce output results R1, R2. The results R1 and R2 are accumulated (i.e., added to whatever value is already stored in) in output cells O0 and O1. Output cells O0 and O1 are physically located in the 'fast' processing registers 1002, which two are available in figure 11.

In more detail, each value in the row of first input data is intended to be multiplied with each value from a corresponding column of the second input. Value t0 is configured to be multiplied with each of [0, 1, 2, 3, 4, ..., 15] and value t1 is intended to be multiplied with each of [16, 17, 18, 19, 20..., 31]. As mentioned, since the slot register has read horizontally consecutive values, none of the second row of second input has been read. Thus, the value t1 cannot be used (the correct corresponding second input values would be [16, 17, 18, 19, 20..., 31], which have not been read). As noted above, there is also still the problem that there are not enough processing registers spaces 1002 available to accumulate the result: i.e., in this case there are only two despite that fact that four columns' worth of second input [0, 1, 2, 3] has been read. In principle, t0 is intended to be multiplied with all four values from the second input, though these multiplications cannot be accumulated in the appropriate position using the available processing registers because they have a capacity of only two cells. It should be appreciated that the processing registers act to perform the multiplication by acting as accumulators. Only two values can be accumulated (i.e., in cells O0 and O1) since only two output cells are available for use. In summary, in this hypothetical example, only half of the values read (t0 from the first input, and [0, 1] from the second input) can be used.

Following this hypothetical scenario to conclusion, step S204 indicates the values that can be multiplied together, i.e., t0 (from the first input) and [0, 1] from the second input. S206 shows the fused multiply-add (FMA) operation. Each thread can perform an FMA, though it should be appreciated that a thread can perform one FMA for each available processing register cell. In the current example with two cells in the processing register 1002, each thread can perform two FMAs concurrently (in the sense that they can operate concurrently in a pipeline without dependency on one another, meaning that the FMA performed in one register need not wait for another FMA to complete its calculation). S206 indicates that the t0 is multiplied with each corresponding second input value, the result being accumulated with the existing values in the registers (zero in this case). The result is indicated as [t0x0, t0x1]. Only half the data read by the slot register 1000 is used. Since the processing registers can perform concurrent FMAs, the actual multiplication and accumulation takes little time compared to the time taken to read the values from the respective memories. Thus, it would be beneficial to exploit the full capacity of the 'burst read' of the slot registers, since reading data is slow compared to performing the concurrent FMA calculations.

It should be appreciated that if the matrix containing the second input data were transposed (i.e., rows and columns inverted), this would not solve the problem. The slot register would simply read values [0, 16, 32, 48] from the first column shown in figure 11. This would then suffer from a different problem in that FMAs would be dependent on one another and thus would not be able to run concurrently (since the result of 't0 x 0' would need to complete before it could be accumulated to the result of 't0 x 16' and so on). Thus, the potential for parallelism in the system would not be fully exploited, and the system pipeline in general would suffer from low utilisation. Therefore, the inventors have established a manner by which the second input data can be transformed such that all values read by the slot register 100 can be used even when the number of values able to be handled in the processing registers 1002 is half the number of values able to be read by the slot registers 1000.

Figure 12A shows the result of a transformation that would allow full utilisation of two processing register spaces. The type of transformation is called 'swizzling' in this disclosure, and the data shown in figure 12A having undergone the transformation is called 'swizzled data'. The shading in figure 12A serves to show the correlation between the data in the unswizzled form in figure 11 and the swizzled data in figure 12A. The effect of swizzling in this particular case of figure 12A is to transpose two adjacent columns of data at a time to form a single row in the swizzled result. More generally, since the limitation of the slot registers is that they can read contiguous data, swizzling should produce the result that the values of data needed for a particular portion of the matrix multiplication by concurrent FMAs (so as to make efficient use of the fast processing registers) should be arranged contiguously in a single row of the swizzle output. In some examples, there may be more than one way to swizzle data so as to effect this result. In the case of Figure 12A, pairs of values in adjacent columns of the original format are thus aggregated such that contiguous pairs of values form a single row. In other words, in this example at least, an [8x2] pair of columns is transformed into a [1x16] row. To give an example, two columns of data [0, 16, 32, 48, 64, 80, 96, 112] and [1, 17, 33, 49, 65, 81, 98, 112] are transformed into a single row of [0, 1, 16, 17, 32, 33, 48, 49, 64, 65, 80, 81, 96, 97, 112, 113]. Technically, for a second input block with dimensions $[K_s, \frac{N_s}{2}, 2]$ we swap values with coordinates [i, j, k] with the value with coordinates [j, i, k], effectively transposing coordinates i and j. It should be noted that, since the matrix in figure 12A is swizzled it represents an altered layout which is not a matrix in the strict mathematical sense. Consequently, the matrix multiplication is customized to the particular swizzle formation, meaning that the output array (here, 01-015) need not match the width of the swizzled table. In other words, it should be appreciated that the output array 01-015, which has 16 values, matches the width of the swizzled matrix, which has 16 columns, by chance.

For different dimensions of slot registers and processing registers the second input data would need to be swizzled in a different way in order to make efficient use of both the burst read by the slot registers and the fast FMA capability of the processing registers.

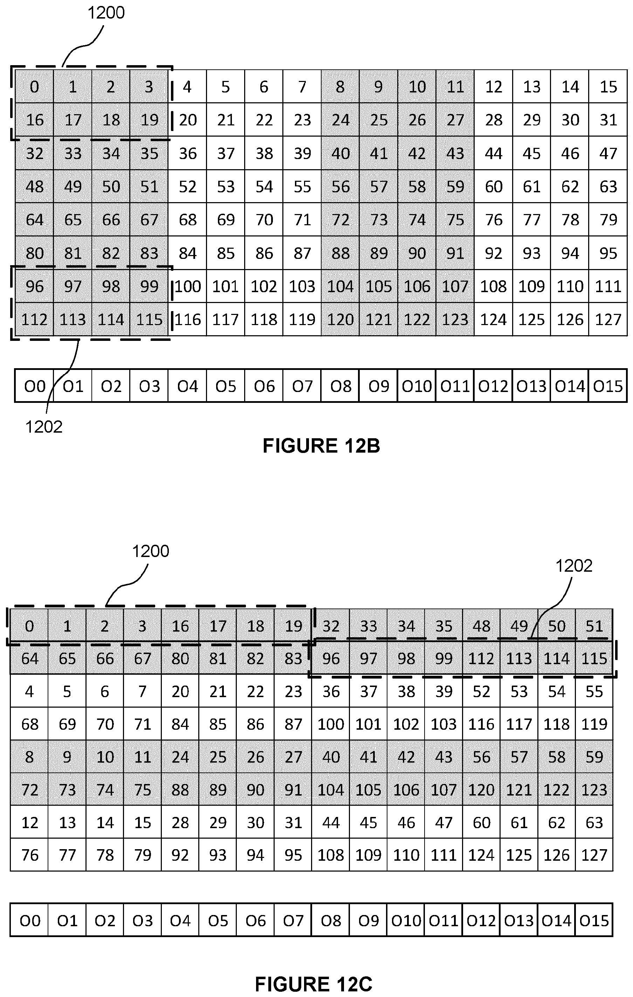

Figure 12B and figure 12C illustrate another example of swizzling data in the case where the capacity of the 'burst read' of the slot register 1000 is eight values and the number of spaces available in the processing register is four. The data in figure 12B represents an un-swizzled second input, and the shading in figure 12B serves to indicate how the data is swizzled data becomes transformed once in the swizzled from shown in figure 12C. To obtain the swizzled form shown in figure 12C, 2x4 blocks of the second input data are transformed into single rows. Each row of the swizzled data is thus formed from two 2x4 blocks of the original data. Data blocks 1200 and 1202 indicate how the data is swizzled from the original form in figure 12B to the swizzled from in figure 12C.

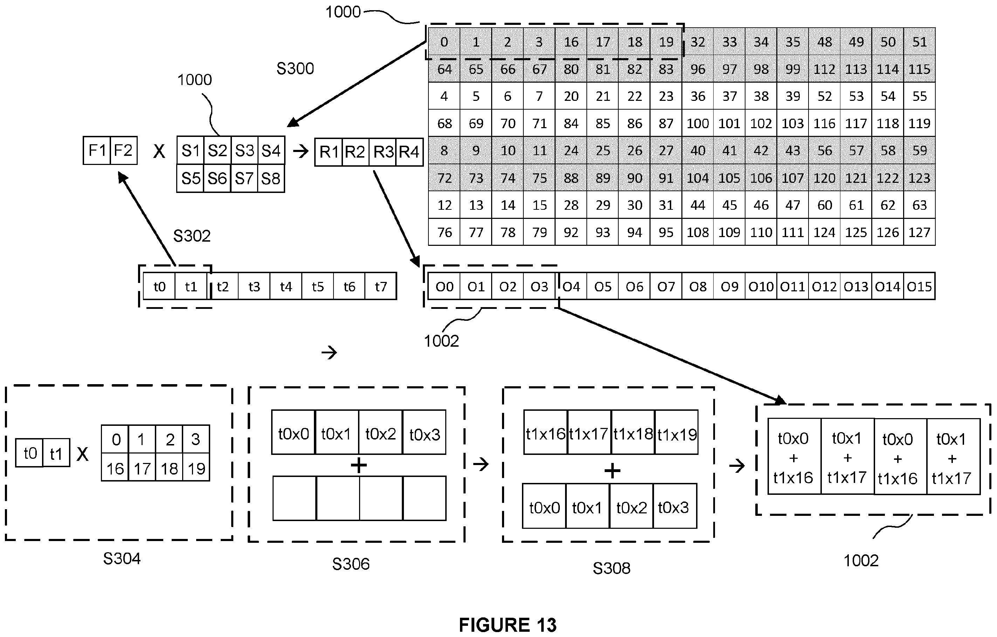

Figure 13 shows the results of using the swizzled data of figure 12C as the second matrix input. In this example, the capacity of the 'burst read' of the slot register 1000 is eight values and the number of spaces available in the processing register is four. Step S300 indicated by an arrow shows, as a first step, a slot register 1000 reading eight contiguous values [0, 1, 3, 4 16, 17, 18, 19] from a local memory dedicated to the processing unit that comprises the slot register 1000. The eight slot register spaces are indicated S1, S2, S3, S4, S5, S6, S7, S8 in figure 13. At step S302, a thread operates a standard register to read the first two values [t0, t1] from a row within a first matrix sub-unit. The two standard registers are indicated F1, F2. These values will ultimately be multiplied together with contiguous values [0, 1, 3, 4 16, 17, 18, 19] and the result (indicated as R1, R2, R3, R4) stored in output cells O0, O1, O2, and O3. Referring to the original, unswizzled, data shown in figure 12B it can be seen that first-input value t0 is arranged to be multiplied with [0, 1, 2, 3] and first-input value t1 is arranged to be multiplied with [16, 17, 18, 19]. Consequently, all values read by the slot register ([0, 1, 2, 3, 16, 17, 18, 19]) are compatible with at least one value read by the processing register (i.e., t0, t1). Moreover, the data read by the slot registers spans the first four columns of the second input data. Thus, the four spaces available in the fact processing registers 1002 can be utilised to perform concurrent FMA operations to accumulate the results of the multiplications.

Step S304 illustrates that the values [t0, t1] read from the first input are to be multiplied with the corresponding values in the slot register. The organisation illustrates that t0 is arranged to be multiplied with [0, 1, 2, 3] and first-input value t1 is arranged to be multiplied with [16, 17, 18, 19]. In S306, four multiply-adds are carried out (i.e., four FMAs). As mentioned, in some examples each thread is able to carry out FMA operations concurrently which is the case here because the four multiplications do not depend on one another. The results of t0x0, t0x1, t0x2, and t0x3 are accumulated in respective cells of the processing register (each multiplication then being added to zero, since no values have yet been accumulated in the processing registers). In step S308, a thread performs four further FMAs. These are: t1x16 + (t0x0), t1x17 + (t0x1), t1x18 + (t0x2), and t1x19 + (t0x3). The results of the new multiplications with t1 are thus accumulated to the existing values stored in the processing register 1002. In total, eight FMAs have been carried out across S306 and S308, utilising eight values of the second input and two values of the first input. The result accumulated in the processing registers is thus added to the next set of four multiplications that would result from the next set of eight burst read by the slot register (i.e., [32, 33, 34, 35, 48, 49, 50, 51]). No new first input values need to be read from the L1 cache, since t0 and t1 are arranged to be multiplied with [32, 33, 34, 35, 48, 49, 50, 51]). The method illustrated in figure 13 thus follows the cycle of: burst read by the slot register 1000; eight FMAs; burst read by the slot register 1000 of the next eight contiguous horizontal values; eight FMAs, and so on. This cycle continues until all values of the row of first input have been multiplied with the corresponding values of the second input. It is therefore especially advantageous to make use of the full capacity of the 'burst read' by swizzling the data, since swizzling the data halves the number of reads that need to be performed by the slot register.

As mentioned previously, the type of data that forms the second input data is usually static in nature. In other words, it is not produced dynamically by the network/system but is a predefined set of constants (e.g. network weights). Consequently, it can be especially advantageous to form the second input data into subunits offline, and pre-swizzle the preformed subunits offline such that swizzled data is read into a dedicated local memory in the first instance. Thus, the matrix multiplication process is not slowed down by the time taken to swizzle the data. Alternatively, it is possible in some examples that the second input data may be swizzled during the process of reading it from external memory. In this case, the swizzling may still be performed efficiently by reading the second input data from some external memory to registers, and then writing from registers to local memory in swizzled order.

It should be appreciated in general that the precise mismatch of register size described in the figure 13 example is independent of the advantages that can be achieved from swizzling data. For example, the swizzled form of data shown in figure 12A would be suitable for use with a slot register configured to read 4 contiguous values at a time. In general, the performance (and therefore the overall power consumption of the system) of the matrix multiplication disclosed herein can benefit from swizzling the second input data. This benefit can be obtained even where there is a different degree of mismatch between the capacity of the processing registers and the capacity of the 'burst read' of the reading registers, although a greater number of reads may be needed to compensate for a different mismatch in size.

In summary, the presently-disclosed methods of re-arranging one input matrix for matrix multiplication solves the problem of having a non-commensurate number of registers. Additionally, the data swizzling disclosed herein solves the separate problem of having a reading register that can only read horizontally contiguous values; at least in the present case, these horizontally read values are of a dimension that is not compatible to be multiplied by the values read from the row of first input data using the available capacity of the fast processing register 1002. Furthermore, full utilisation of the FMA capability of the registers and good utilisation of the parallelisation capabilities of the warps/threads can be achieved in some cases with zero (or close to zero) cost. This zero cost can be achieved in particular when the second input data is pre-swizzled (i.e., formed into subunits and swizzled offline prior to the matrix multiplication commencing), meaning that the compute time spent swizzling the data does not have any dependency with, or delay, the progress of the matrix multiplication.

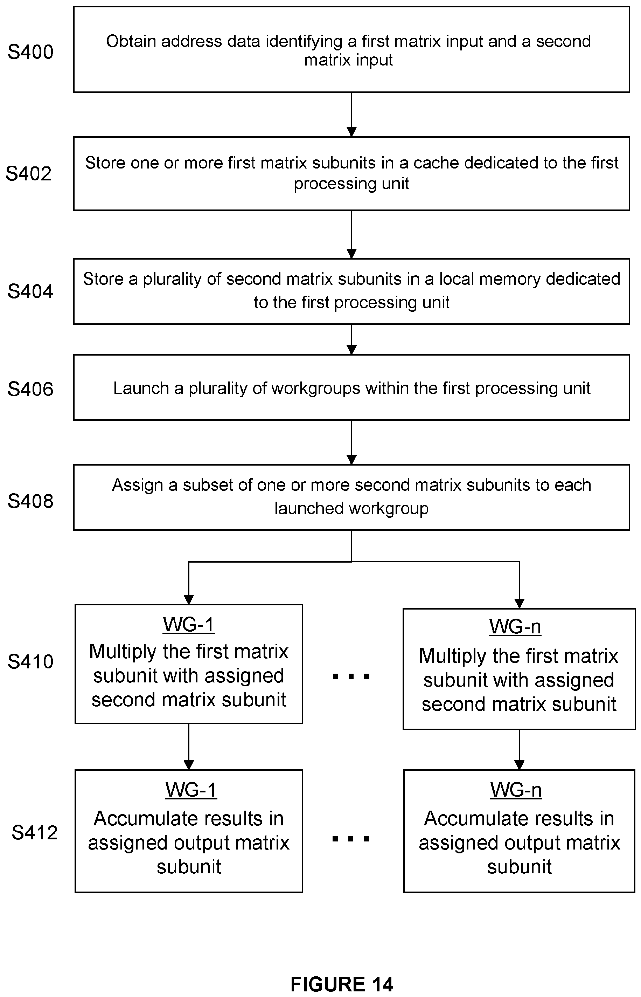

Figure 14 is flowchart outlining the general steps of a method of matrix multiplication according to the inter-workgroup embodiments. The steps of the method are carried out by elements of at least one processing unit 202. The steps of the method are described with reference to aspects of the preceding figures for explanatory purposes, but the steps of the method are not intended to be restricted to any element or aspect indicated by the figures.

Step 400 comprises obtaining address data identifying a first matrix input and a second matrix input. The address data could be the storage location in memory, e.g., global memory 108 or an L2 cache 202, or could be a pointer to a location in some storage/memory location accessible by the processing unit.

Step 402 comprises storing one or more first matrix subunits in a cache dedicated to the first processing unit. For example, the cache could be an L1 cache 204. Optionally, a plurality of first matrix subunits may be allocated, but not necessarily stored, in the cache dedicated to the first processing unit. For example, referring to figure 7B, a block of 24 subunits is assigned to L1 cache L1-1, though only four subunits, T1-1 to T4-1, are stored in the L1-1 cache. Similarly, in figure 9B, 6 subunits of first input data are assigned to each L1 cache, however, only the first subunit of each row needs to be accessed in one pass, therefore it may be that only the first subunit in each row is actually stored. In summary, in this step it may be that only one first matrix subunit is stored in a dedicated cache.

Step 404 comprises storing a plurality of second matrix subunits in a local memory dedicated to the first processing unit. As with the first input, a larger subset of second data may be assigned than is stored to the local memory. Taking the figure 7B example, all of 54 blocks of second input data (A1-1 to A6-9) may be assigned to LM-1 local memory. However, since only the first row of second input data (A1-1, A1-2, A1-3 etc) is actually needed by the workgroups in the first pass, then it may be that only the first row (as shaded) is stored in local memory initially.

Step 406 comprises launching a plurality of workgroups. Launching may simply comprise assigning/allocating threads within the processing unit to workgroups and, e.g., determining a number of available threads and/or warps that may be run based on factors such as an available number of registers. Generally, two or more workgroups may be launched at this stage, but in some cases up to 24, 32 or even 48 workgroups may be launched.

Step 408 comprises assigning a subset of one or more second matrix subunits to each launched workgroup. The allocation may therefore relate to which set of second matrix subunits are to be handled by each particular workgroup. In the preceding examples, second input subunits in the same (logical) column as each workgroup were allocated to said workgroup. For example, taking the figure 7B example, subunits [A1-1; A2-1; A3-1; A4-1; A5-1; A6-1] may be assigned to WG-1. Again, not all of these second input subunits are necessarily stored in local memory at this stage (though at least A1-1 usually would be).

Step 410 comprises multiplying, by each launched workgroup, the first matrix subunit (that is stored in the dedicated cache) with the second matrix subunits allocated to the launched workgroup. In other words, each launched workgroup multiplies the same first input subunit (where each workgroup has retrieved that first input subunit from the same cache) with a second subunit that has been allocated to the launched workgroup. For example, in figure 7B, WG-1 would multiply T1-1 with A1-1, WG-2 would multiply T1-1 with A1-2, WG-3 would multiply T1-1 with A1-3, and so on. Figure 14 indicates that this occurs concurrently (though not necessarily simultaneously) for a plurality of workgroups.

At step 412, again for each workgroup, the result of the workgroup's respective multiplication is stored (i.e., accumulated) in the output subunit to which the workgroup is allocated. For example, referring to figure 4, the result of the multiplication T1 x A1-1, performed by WG-1, is stored in output subunit O1. Prior to this, the value of O1 may be empty. At the next pass, WG-1 will multiply T2 x A2-1, and will accumulate the result of that multiplication with the already-stored value of T1 x A1-1. In other words, the accumulation would comprise a cell-wise addition of (T1 x A1-1) + (T2 x A2-1).

The steps of S410 to S412 may repeat as many times as needed until all available (i.e., stored or allocated) subunits have been multiplied. The dedicated cache and/or local memory may have to load data that has been allocated to them, but not stored, during the iterations of S410 and S412. Once all allocated data has been multiplied, the method may restart at S400 to multiply new matrix data. Furthermore, the steps of S400 to S412 may be carried out concurrently between a plurality of processing units. Those plurality of processing units may share some of the data (i.e., store their own separate copies of the same data). An example of this is shown in figure 9B, in which four processing units, each having launched nine workgroups, multiply different allocations of first input data with the same allocation of second input data.

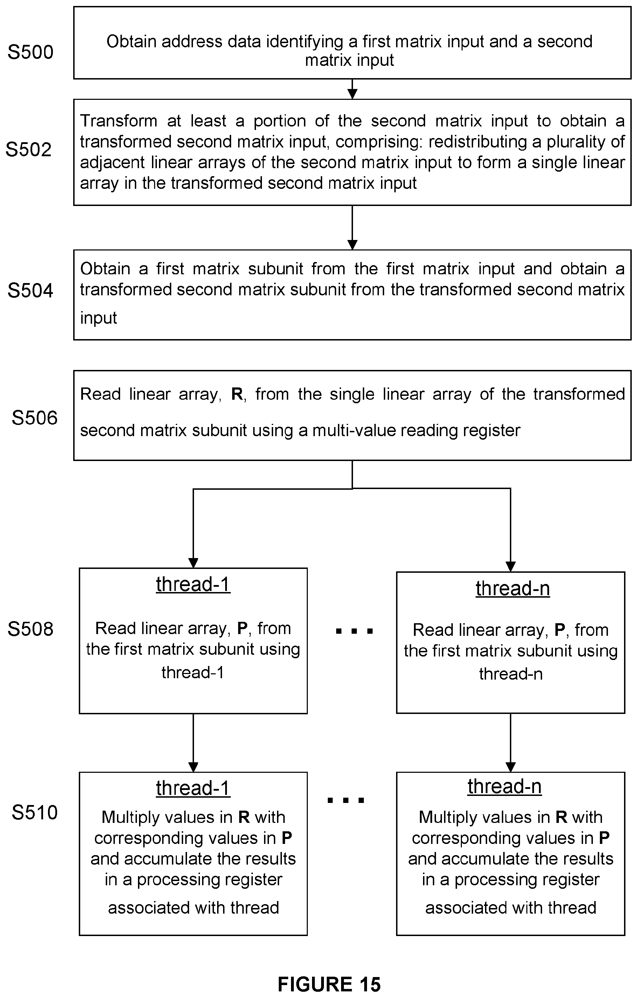

Figure 15 is a flowchart outlining the general steps of a method of matrix multiplication according to the intra-workgroup embodiments. The steps of the method are carried out by elements of at least one workgroup 202. Generally, a single thread of a workgroup may carry out the individual steps in figure 15. For explanatory purposes, however, figure 15 shows an example comprising a plurality of threads. The steps of the method are described with reference to aspects of the preceding figures for explanatory purposes, but the steps of the method are not intended to be restricted to any element or aspect indicated by the previous figures.

Step 500 comprises obtaining address data identifying a first matrix input and a second matrix input. The address data could be the storage location in memory, e.g., global memory 108 or an L2 cache 202, or could be a pointer to a location in some storage/memory location accessible by the processing unit (or workgroup within the processing unit).

Step 502 comprises transforming at least a portion of the second matrix input to obtain a transformed second matrix input, where the transforming comprises: redistributing a plurality of adjacent linear arrays of the second matrix input to form a single linear array in the transformed second matrix input. Preferably, the plurality of adjacent linear arrays of the second matrix input form a set of adjacent (contiguous) row portions. An example of this transformation is indicated in Figure 12A, which shows 'swizzled' data having been obtained by the above-described transformation of the second matrix input data shown in Figure 7A. Figure 12A shows a complete transformation of an entire subunit, in which adjacent sets of two-value arrays (i.e., forming the first two columns of the unswizzled data in figure 7A) are redistributed into a single row (the first row in figure 12A). Figure 12C shows a different form of swizzled data in which adjacent sets of four-value arrays are redistributed into a single row: here, a group of four adjacent four-value arrays are re-distributed into a single row, as indicated by the shading. However, for the purposes of the method, only a portion may be transformed at a time. For example, in some embodiments, only the first two linear arrays (e.g., columns) of a second matrix subunit may be transformed into a single linear array (e.g., row).

Step 504 comprises obtaining a first matrix subunit and a transformed second matrix subunit.

Step 506 comprises reading, by a reading array, a linear array **R** from the single linear array formed in the transformed second matrix subunit using a multi-value reading register. In previous examples, the ability to read multiple values (concurrently) is called a 'burst read'. The multi-value reading register is called a slot register elsewhere in this disclosure. In some cases, the multi-value reading register may be configured to read contiguous values of the single linear array. Generally, the multi-value reading register is controlled at a workgroup level rather than at a thread level, though each thread within a workgroup has access to the values read by the multi-value reading register.

Step 508 indicates the process carried out by a plurality of threads. However, in principle, only one thread may perform the steps of the method. The advantages of transforming the second input data will still be achieved independent of the number of threads that carry out the method. At step S508, a linear array **P** is read from the first matrix subunit (and stored in the first instance in a standard register) using a particular thread.

Step 510, each thread multiplies values in linear array **R** with corresponding values in linear array **P.** For example, referring to figure 13, this step corresponds to step S304 in which values [t0, t1] (corresponding to linear array **P)** are multiplied with the corresponding values of [0, 1, 16, 17] (corresponding to linear array **R).** As indicated in figure 13, the results of the multiplication are accumulated (i.e., shown in step S308) into respective cells of the processing register. As mentioned in previous examples, the threads are capable of performing fused multiply-add operations (FMAs). Registers, in general, are a form of (fast) data storage that can serve as input to an instruction. In particular the processing registers 1002 can be used to accumulate the results of the FMAs especially quickly, i.e., at best at speeds of one FMA per clock cycle. Furthermore, the thread causing the FMAs to accumulate in the processing registers may perform concurrent FMAs, where the number of processing register spaces 1002 (i.e., there are four spaces in the processing register 1002 example of figure 13) defines the number of concurrent FMAs that are possible. For example, in figure 13, the thread controlling the processing register may be able to perform two FMAs concurrently.

Steps S508 to S510 may be iterated over the entire array of data in the available second matrix subunit and the available first matrix subunit. Referring to figure 13, the multi-value reading register may iterate over the entire second input subunit by 'burst reading' successive contiguous arrays. Each thread will then multiply the corresponding values of first input, using the processing register, with the burst read values, and accumulate the results from the relevant column (of second data) into the relevant respective processing register 1002.

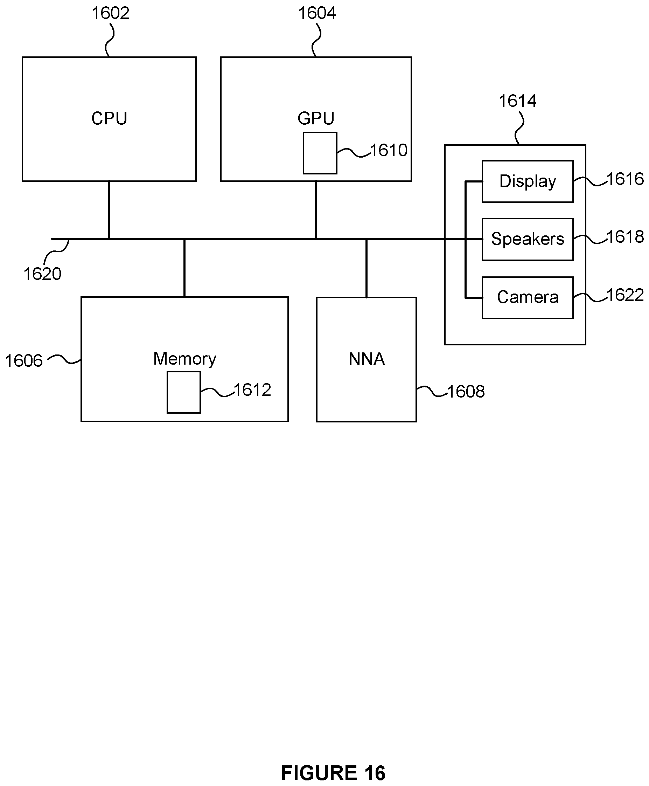

For the purposes of the following disclosure, the term graphics processing system is used interchangeably with multi-threaded processing system. The system disclosed in figure 16 is not intended to be limited to a graphics processing system, which would be recognised by the skilled person since the ability to perform matrix multiplication is agnostic of the type of multi-threaded system being used.

Figure 16 shows a computer system in which the graphics processing systems described herein may be implemented. The computer system comprises a CPU 1602, a GPU 1604, a memory 1606, a neural network accelerator (NNA) 1608 and other devices 1614, such as a display 1616, speakers 1618 and a camera 1622. A processing block 1610 (corresponding to processing element 102) is implemented on the GPU 1604. In other examples, one or more of the depicted components may be omitted from the system, and/or the processing block 1610 may be implemented on the CPU 1602 or within the NNA 1608. The components of the computer system can communicate with each other via a communications bus 1620. A store 1612 (corresponding in some examples to global memory 108, though in other examples global memory 108 is part of the GPU 1604 itself) is implemented as part of the memory 1606.

The multi-threaded processing system of Figures 1A, 1B, and 2 are shown as comprising a number of functional blocks. This is schematic only and is not intended to define a strict division between different logic elements of such entities. Each functional block may be provided in any suitable manner. It is to be understood that intermediate values described herein as being formed by a multi-threaded processing system need not be physically generated by the multi-threaded processing system at any point and may merely represent logical values which conveniently describe the processing performed by the multi-threaded processing system between its input and output.

The multi-threaded processing systems described herein may be embodied in hardware on an integrated circuit. The multi-threaded processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e., run) in an integrated circuit manufacturing system configures the system to manufacture a multi-threaded processing system configured to perform any of the methods described herein, or to manufacture a multi-threaded processing system comprising any apparatus described herein. An integrated circuit definition dataset may be, for example, an integrated circuit description.

Therefore, there may be provided a method of manufacturing, at an integrated circuit manufacturing system, a multi-threaded processing system as described herein. Furthermore, there may be provided an integrated circuit definition dataset that, when processed in an integrated circuit manufacturing system, causes the method of manufacturing a multi-threaded processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

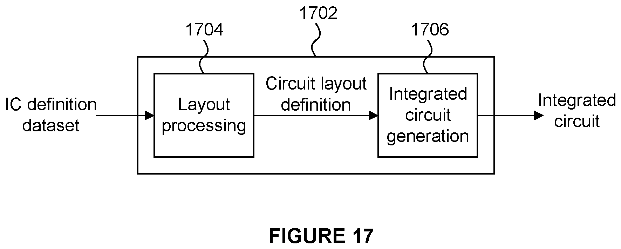

An example of processing an integrated circuit definition dataset at an integrated circuit manufacturing system so as to configure the system to manufacture a multi-threaded processing system will now be described with respect to Figure 17.

Figure 17 shows an example of an integrated circuit (IC) manufacturing system 1702 which is configured to manufacture a multi-threaded processing system as described in any of the examples herein. In particular, the IC manufacturing system 1702 comprises a layout processing system 1704 and an integrated circuit generation system 1706. The IC manufacturing system 1702 is configured to receive an IC definition dataset (e.g., defining a multi-threaded processing system as described in any of the examples herein), process the IC definition dataset, and generate an IC according to the IC definition dataset (e.g. which embodies a multi-threaded processing system as described in any of the examples herein). The processing of the IC definition dataset configures the IC manufacturing system 1702 to manufacture an integrated circuit embodying a multi-threaded processing system as described in any of the examples herein.

The layout processing system 1704 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g., in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1704 has determined the circuit layout it may output a circuit layout definition to the IC generation system 1706. A circuit layout definition may be, for example, a circuit layout description.

The IC generation system 1706 generates an IC according to the circuit layout definition, as is known in the art. For example, the IC generation system 1706 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1706 may be in the form of computer-readable code which the IC generation system 1706 can use to form a suitable mask for use in generating an IC.

The different processes performed by the IC manufacturing system 1702 may be implemented all in one location, e.g., by one party. Alternatively, the IC manufacturing system 1702 may be a distributed system such that some of the processes may be performed at different locations and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a multi-threaded processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 17 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 17, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g., in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

Aspects of the present disclosure may also be described with reference to the following clauses:

1. A method of performing matrix multiplication in a multithreaded processing system, wherein the multithreaded processing system comprises one or more processing units, each processing unit coupled with i) a dedicated cache and ii) a dedicated local memory, and wherein each processing unit is configured to operate a plurality of threads grouped into a plurality of workgroups, the method comprising:

obtaining address data identifying a first matrix input and a second matrix input;
for a first processing unit of the multithreaded processor:

storing, in a cache dedicated to the first processing unit, at least a portion of the first matrix input as one or more first matrix subunits;
storing, in a local memory dedicated to the first processing unit, at least a portion of the second matrix input as a plurality of second matrix subunits;

generating a plurality of output matrix subunits, the generating comprising:

launching, at the first processing unit, a plurality of workgroups;
for each launched workgroup of the launched plurality of workgroups:

assigning a subset of one or more second matrix subunits to the workgroup;
multiplying, by threads of the workgroup, each of the one or more first matrix subunits with a corresponding second matrix subunit of the subset of second matrix subunits to obtain an output matrix subunit;

wherein, during the generation of the plurality of output matrix subunits, the one or more first matrix subunits are concurrently accessed by each launched workgroup from the cache dedicated to the first processing unit.

2. The method of clause 1, wherein the step of multiplying, by each launched workgroup, each one or more first matrix subunit with a corresponding second matrix subunit of the one or more second matrix subunits comprises using every thread of the launched workgroup to handle a respective array of values of a plurality of arrays forming the first matrix subunit.

3. The method of clause 1 or 2, wherein each workgroup is defined by a predetermined number of threads configured to perform the same instruction concurrently.

4. The method of any preceding clause, wherein dimensions of the second matrix subunits are determined in dependence on i) a storage capacity of the local memory and ii) a threshold number of workgroups available within the first processing unit.

5. The method of clause 4, wherein the dimensions of the second matrix subunits comprise a first dimension, $K_S$, and a second dimension, $N_S$, and determining the dimensions of the second matrix subunits comprises:

determining a total available storage in the local memory, $LM_{total}$;
selecting at least one of: i) the first dimension, $K_S$, and ii) the second dimension, $N_S$, to satisfy:

$$K_S \times N_S \leq \frac{LM_{total}}{C \times O}$$

where O defines a number of target workgroups in a processing unit and C defines the size of a matrix value.

6. The method of clause 5, wherein determining the dimensions of the second matrix subunits further comprises:

determining an available register space, $R_{WG}$, in dependence on a number of excess registers used by each workgroup;
selecting the first dimension, $K_S$, and the second dimension, $N_S$, to satisfy:

$$K_S + N_S + R_{WG} \leq \frac{R_{PU}}{O}$$

where $R_{PU}$ defines a register availability of the processing unit.

7. The method of any preceding clause, wherein each subset of second matrix subunits assigned to respectively launched workgroups form different portions of the second matrix input.

8. The method of any preceding clause, wherein a remainder of available storage in the cache dedicated to the first processing unit not used to store the portion of the first matrix input unit is less than an amount of storage required to store one first matrix subunit.

9. The method of clause 5, wherein a second dimension, $N_S$, of each second matrix subunit of the plurality of second matrix subunits is determined in dependence on a bandwidth of the cache.

10. The method of clause 1, wherein a first dimension, $M_S$, of each first matrix subunit is equal to an integer multiple of a number of threads of each workgroup.

11. The method of any preceding clause, subsequent to generating the plurality of output matrix subunits, a further portion of the first matrix input is stored in the cache as a further one or more first matrix subunits, wherein the further portion of the first matrix input is used to generate a further plurality of output matrix subunits using the stored portion of the second matrix input.

12. The method of any preceding clause, further comprising:

for at least one further processing unit comprised within the multithreaded processing system:

storing, in a cache dedicated to the further processing unit, a further portion of the first matrix input as a further one or more first matrix subunits;
storing, in a local memory dedicated to the further processing unit, at least a portion of the second matrix input as a plurality of second matrix subunits;

wherein generating the plurality of output matrix subunits comprises generating multiple pluralities of output matrix subunits, one plurality of output matrix subunits per processing unit.

13. The method of clause 12, wherein the plurality of second matrix subunits stored in the local memory dedicated to each at least one further processing unit is the same plurality of second matrix subunits stored in the local memory of the first processing unit.

14. The method of clause 12 or 13, wherein a plurality of workgroups is launched from each processing unit, the method further comprising:

forming logical groups of workgroups;
assigning each logical group to a respective cache;
wherein the assignment of logical groups to respective caches defines the cache from which each logical group of workgroups retrieves the one or more first matrix subunit during the multiplying.

15. The method of clause 14, wherein for each logical group of workgroups:

the logical group belongs to a common first processing unit, and the respective cache assigned to the logical group is a dedicated cache to that common first processing unit,
wherein, during the generating the plurality of output matrix subunits, each workgroup retrieves each one or more first matrix subunit from the dedicated cache without the dedicated cache retrieving further first matrix subunits.

16. The method of any preceding clause, wherein a number of the first matrix subunits allocated to the cache dedicated to the first processing unit is equal to a number of the respective subset of second matrix subunits stored in the local memory and allocated to each workgroup.

17. The method of any preceding clause, wherein each workgroup of the launched plurality of workgroups operates concurrently to multiply each of the one or more first matrix subunits with the corresponding second matrix subunit.

18. The method of any preceding clause, wherein the step of multiplying comprises retrieving, by a multi-value reading register associated with the workgroup, a plurality of contiguous values from the corresponding second matrix subunit forming a linear array, R.

19. The method of clause 18, wherein the step of multiplying comprises concurrently processing, by a multi-value processing register associated with a thread of the workgroup, linear array R with a plurality of contiguous values retrieved from the first matrix subunit forming a linear array, P.

20. The method of clause 19, wherein the concurrent processing comprises:
performing concurrent multiplication operations, one operation per cell in the multi-value processing register, wherein each multiplication operation comprises multiplying a value in the linear array R with a corresponding value from the linear array **P.**

21. The method of clause 19 or 20, wherein a capacity of the multi-value processing register is smaller than a capacity of the multi-value reading register, the method further comprising:

transforming at least a portion of the corresponding second matrix subunit to obtain a transformed second matrix subunit, comprising redistributing a plurality of adjacent linear arrays of the second matrix subunit into a single array;
wherein the linear array, **R,** is formed of a plurality of contiguous values from the transformed second matrix subunit.

22. The method of clause 21, wherein all data from the linear array, **P,** is processed by the multi-value processing register in conjunction with all data from the linear array, **R,** during the multiplying.

23. The method of clause 21 or 22, wherein transforming at least a portion of the corresponding second matrix comprises transforming the second matrix input, prior to the multiplying, to obtain a transformed second matrix input, and wherein each of the plurality of second matrix subunits stored in the local memory dedicated to the first processing unit are transformed second matrix subunits.

24. The method of any preceding clause, wherein the multithreaded processing system is a graphics processing unit, GPU.

25. A multithreaded processing system for performing matrix multiplication comprising:

a plurality of processing units, wherein each processing unit is coupled with:

a dedicated respective cache;
a dedicated respective local memory,

wherein each processing unit is configured to operate a plurality of threads grouped into a plurality of workgroups, the multithreaded processing system being configured to:

obtain address data identifying a first matrix input and a second matrix input;
for a first processing unit of the multithreaded processor:

store, in a cache dedicated to the first processing unit, at least a portion of the first matrix input as a plurality of first matrix subunits;
store, in a local memory dedicated to the first processing unit, at least a portion of the second matrix input as a plurality of second matrix subunits;
determine dimensions of the second matrix subunits in dependence on i) a storage capacity of the local memory and ii) a threshold number of workgroups available within the first processing unit;

generate a plurality of output matrix subunits by:

launching, at the first processing unit, a plurality of workgroups;
for each launched workgroup of the launched plurality of workgroups:

assigning a respective subset of second matrix subunits to the workgroup;
multiplying, by threads of the workgroup, each first matrix subunit of the plurality of first matrix subunits with a corresponding second matrix subunit of the respective subset of second matrix subunits to obtain an output matrix subunit;

wherein the multithreaded processing system is configured, during the generation of the plurality of output matrix subunits, to maintain the plurality of first matrix subunits in the cache dedicated to the first processing unit to be reused by each launched workgroup.

26. A multithreaded processing system configured to perform the method of any of clauses 1 to 24.

27. A computer readable storage medium having encoded thereon computer readable code configured to cause the method of any of clauses 1 to 24 to be performed when the code is run.

28. An integrated circuit definition dataset that, when processed in an integrated circuit manufacturing system, configures the integrated circuit manufacturing system to manufacture a multithreaded processing system as in clause 25 or 26.

29. A non-transitory computer readable storage medium having stored thereon a computer readable description of a multithreaded processing system as in clause 25 or 26 that, when processed in an integrated circuit manufacturing system, causes the integrated circuit manufacturing system to manufacture an integrated circuit embodying the multithreaded processing system.

**Claims**

1. A computer-implemented method of performing matrix multiplication on a processing unit, wherein the processing unit comprises one or more processing threads, each thread being associated with a multi-value reading register and a multi-value processing register, wherein a capacity of the multi-value processing register is smaller than a capacity of the multi-value reading register, the method comprising:

   obtaining address data identifying a first matrix input and a second matrix input;
   transforming at least a portion of the second matrix input to obtain a transformed second matrix input, comprising redistributing a plurality of adjacent linear arrays of the second matrix input to form a single linear array in the transformed second matrix input;
   obtaining a first matrix subunit from the first matrix input and a transformed second matrix subunit from the transformed second matrix input;
   obtaining, using a multi-value reading register, a linear array, **R,** from the single linear array of the transformed second matrix subunit;
   at a thread of the processing unit:

   obtaining a plurality of values from the first matrix subunit;
   for each value in the linear array **R,** multiplying the value with a corresponding value from the plurality of values of the first matrix subunit and accumulating the results of the multiplying in a linear array **P,** stored in a multi-value processing register associated with the thread, wherein the accumulated results form at least a portion of an output matrix.

2. The method of claim 1, wherein the multi-value reading register and the multi-value processing register are configured to read a plurality of contiguous values from a linear array of values.

3. The method of any preceding claim, wherein the multi-value processing register comprises a plurality of processing cells, wherein the thread of the processing unit is configured to operate the multi-value processing register to perform concurrent multiplication operations, one operation per processing cell.

4. The method of any preceding claim, wherein the transforming the portion of the second matrix input comprises: redistributing two or more adjacent linear arrays of having a first dimension to form at least part of a single linear array in the first dimension.

5. The method of any preceding claim, wherein the capacity of the multi-value processing register is half the capacity of the multi-value reading register, and a number of values in the linear array **P** is half a number of values in the linear array **R,** the method comprising:
   for each value plurality of values of the first matrix subunit:
   multiplying the value with two respective values in the linear array **R,** and accumulating the multiplication results in a respective cell in the linear array **P** stored in the multi-value processing register;
wherein an accumulated result in each respective cell of the multi-value processing register contributes to a respective cell of the output matrix.

6. The method of any preceding claim, wherein the processing unit comprises groups of threads defining workgroups, wherein each workgroup of threads is associated with a dedicated reading registers arranged to service all thread in the workgroup.

7. The method of any preceding claim, wherein the processing unit comprises a plurality of threads, and wherein each thread is coupled with a dedicated multi-value processing register.

8. The method of claim 7, wherein each thread of the plurality of threads concurrently generates a respective linear array of the output matrix by performing the obtaining and multiplying steps.

9. The method of claim 7 or 8, wherein each thread of the plurality of threads obtains a common linear array, **R,** from the second dimension of the transformed second matrix subunit, and retrieves a different plurality of values from the first matrix subunit.

10. The method of any preceding claim, wherein the step of obtaining the linear array, **R,** using the multi-value reading register comprises a single clock cycle.

11. The method of any preceding claim wherein the step of obtaining the linear array, **R,** is performed concurrently with at least part of the step of multiplying.

12. The method of any preceding claim, wherein the first matrix subunit is stored in a cache dedicated to the processing unit.

13. The method of any preceding claim, wherein the second matrix subunit is stored in a local memory dedicated to the processing unit.

14. The method of any preceding claim, wherein the step of transforming at least a portion of the second matrix input to obtain the transformed second matrix input is performed prior to obtaining the address data, and wherein the second matrix input identified by the address input is the transformed second matrix input.

15. A processing unit for performing matrix multiplication, wherein the processing unit comprises one or more processing threads, each thread being associated with a multi-value reading register and a multi-value processing register, wherein a capacity of the multi-value processing register is smaller than a capacity of the multi-value reading register, the processing unit configured to:

    obtain address data identifying a first matrix input and a second matrix input;
    transform at least a portion of the second matrix input to obtain a transformed second matrix input, comprising redistributing a plurality of adjacent linear arrays of the second matrix input to form a single linear array in the transformed second matrix input;
    obtain a first matrix subunit from the first matrix input and a transformed second matrix subunit from the transformed second matrix input;
    obtain, using a multi-value reading register, a linear array, **R,** from the single linear array of the transformed second matrix subunit;
    at a thread of the processing unit:

        obtain a plurality of values from the first matrix subunit;
        for each value in the linear array **R,** multiply the value with a corresponding value from the plurality of values of the first matrix subunit and accumulating the results of the multiplying in a linear array **P,** stored in a multi-value processing register associated with the thread, wherein the accumulated results form at least a portion of an output matrix.

PE-1 102-1

Logic
104-1

Mem.
106-1

PE-2 102-2

Logic
104-2

Mem.
106-2

⋮

PE-n 102-n

Logic
104-n

Mem.
106-n

GPU 100

108

Global Memory

**FIGURE 1A**

102

Logic

104

110

Element Memory

106

Global Memory

108

**FIGURE 1B**

**FIGURE 2**

N

| A1-1 | A1-2 | A1-3 |
| A2-1 | A2-2 | A2-3 |
| A3-1 | A3-2 | A3-3 |
| A4-1 | A4-2 | A4-3 |
| A5-1 | A5-2 | A5-3 |
| A6-1 | A6-2 | A6-3 |

K

| T1-1 | T1-2 | T1-3 | T1-4 | T1-5 | T1-6 | WG-1 | WG-2 | WG-3 |
| T2-1 | T2-2 | T2-3 | T2-4 | T2-5 | T2-6 | WG-4 | WG-5 | WG-6 |

M

K

**FIGURE 3A**

N_STRIDE

K_STRIDE

| A1-1 |
| A2-1 |
| A3-1 |
| A4-1 |
| A5-1 |
| A6-1 |

K_STRIDE

| T1-1 | T1-2 | T1-3 | T1-4 | T1-5 | T1-6 | Output |

M_STRIDE

**FIGURE 3B**

| | A1-1 | A1-2 | A1-3 |
|---|---|---|---|
| | A2-1 | A2-2 | A2-3 |
| | A3-1 | A3-2 | A3-3 |

| T1-1 | T1-2 | T1-3 | WG-1 O1 | WG-2 O2 | WG-3 O3 |
|---|---|---|---|---|---|
| T2-1 | T2-2 | T2-3 | WG-4 O4 | WG-5 O5 | WG-6 O6 |

**FIGURE 4**

S100
> **Multiplications**
> WG-1: T1-1 x A1-1; WG-2: T1-1 x A1-2; WG-3: T1-1 x A1-3;
> WG-4: T2-1 x A1-1; WG-5: T2-1 x A1-2; WG-6: T2-1 x A1-3;
> are performed and accumulated in O1-O6

S102
> **Multiplications**
> WG-1: T1-2 x A2-1; WG-2: T1-2 x A2-2; WG-3: T1-2 x A2-3;
> WG-4: T2-2 x A2-1; WG-5: T2-2 x A2-2; WG-6: T-2-2 x A2-3;
> are performed and accumulated in O1-O6

S104
> **Multiplications**
> WG-1: T1-3 x A3-1; WG-2: T1-3 x A3-2; WG-3: T1-3 x A3-3;
> WG-4: T2-3 x A3-1; WG-5: T2-3 x A3-2; WG-6: T2-3 x A3-3;
> are performed and accumulated in O1-O6

**FIGURE 5**

| a-1(1) | a-1(2) | ... | | | | | a-1(8) |
|--------|--------|-----|---|---|---|---|--------|
| a-2(1) | a-2(2) | ... | | | | | |
| a-3(1) | ... | ... | | | | | |
| a-4(1) | | | ... | | | | |
| a-5(1) | | | | ... | | | |
| a-6(1) | | | | | ... | | |
| a-7(1) | | | | | | ... | |
| a-8(1) | | | | | | | a-8(8) |

| t-0 | O-0 |
|-----|-----|
| t-1 | O-1 |
| t-2 | O-2 |
| t-3<br>...<br>t-(n-1) | O-3<br>...<br>O-(n-1) |
| t-n | O-n |

# FIGURE 6

A1-1

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| 16 | 17 | 18 | 19 | 20 | 21 | 22 | 23 | 24 | 25 | 26 | 27 | 28 | 29 | 30 | 31 |
| 32 | 33 | 34 | 35 | 36 | 37 | 38 | 39 | 40 | 41 | 42 | 43 | 44 | 45 | 46 | 47 |
| 48 | 49 | 50 | 51 | 52 | 53 | 54 | 55 | 56 | 57 | 58 | 59 | 60 | 61 | 62 | 63 |
| 64 | 65 | 66 | 67 | 68 | 69 | 70 | 71 | 72 | 73 | 74 | 75 | 76 | 77 | 78 | 79 |
| 80 | 81 | 82 | 83 | 84 | 85 | 86 | 87 | 88 | 89 | 90 | 91 | 92 | 93 | 94 | 95 |
| 96 | 97 | 98 | 99 | 100 | 101 | 102 | 103 | 104 | 105 | 106 | 107 | 108 | 109 | 110 | 111 |
| 112 | 113 | 114 | 115 | 116 | 117 | 118 | 119 | 120 | 121 | 122 | 123 | 124 | 125 | 126 | 127 |

O-0

| O0 | O1 | O2 | O3 | O4 | O5 | O6 | O7 | O8 | O9 | O10 | O11 | O12 | O13 | O14 | O15 |
|----|----|----|----|----|----|----|----|----|----|-----|-----|-----|-----|-----|-----|

t-0

| t0 | t1 | t2 | t3 | t4 | t5 | t6 | t7 |
|----|----|----|----|----|----|----|----|

**FIGURE 7A**

FIGURE 7B

| WG-1 (PU-1) | WG-2 (PU-2) | WG-3 (PU-3) | WG-4 (PU-4) | WG-5 (PU-1) | WG-6 (PU-2) | WG-7 (PU-3) | WG-8 (PU-4) | WG-9 (PU-1) |
|---|---|---|---|---|---|---|---|---|
| WG-10 (PU-2) | WG-11 (PU-3) | WG-12 (PU-4) | WG-13 (PU-1) | WG-14 (PU-2) | WG-15 (PU-3) | WG-16 (PU-4) | WG-17 (PU-1) | WG-18 (PU-2) |
| WG-19 (PU-3) | WG-20 (PU-4) | WG-21 (PU-1) | WG-22 (PU-2) | WG-23 (PU-3) | WG-24 (PU-4) | WG-25 (PU-1) | WG-26 (PU-2) | WG-27 (PU-3) |
| WG-28 (PU-4) | WG-29 (PU-1) | WG-30 (PU-2) | WG-31 (PU-3) | WG-32 (PU-4) | WG-33 (PU-1) | WG-34 (PU-2) | WG-35 (PU-3) | WG-36 (PU-4) |

FIGURE 8

| WG-1 (PU-1) | WG-5 (PU-1) | WG-9 (PU-1) | WG-13 (PU-1) | WG-17 (PU-1) | WG-21 (PU-1) | WG-25 (PU-1) | WG-29 (PU-1) | WG-33 (PU-1) |
|---|---|---|---|---|---|---|---|---|
| WG-2 (PU-2) | WG-6 (PU-2) | WG-10 (PU-2) | WG-14 (PU-2) | WG-18 (PU-2) | WG-22 (PU-2) | WG-26 (PU-2) | WG-30 (PU-2) | WG-34 (PU-2) |
| WG-3 (PU-3) | WG-7 (PU-3) | WG-11 (PU-3) | WG-15 (PU-3) | WG-19 (PU-3) | WG-23 (PU-3) | WG-27 (PU-3) | WG-31 (PU-3) | WG-35 (PU-3) |
| WG-4 (PU-4) | WG-8 (PU-4) | WG-12 (PU-4) | WG-16 (PU-4) | WG-20 (PU-4) | WG-24 (PU-4) | WG-28 (PU-4) | WG-32 (PU-4) | WG-36 (PU-4) |

FIGURE 9A

EP 4 672 039 A1

| LM-1 | A1-1 | A1-2 | A1-3 | A1-4 | A1-5 | A1-6 | A1-7 | A1-8 | A1-9 |
|---|---|---|---|---|---|---|---|---|---|
| LM-2 | A2-1 | A2-2 | A2-3 | A2-4 | A2-5 | A2-6 | A2-7 | A2-8 | A2-9 |
| LM-3 | A3-1 | A3-2 | A3-3 | A3-4 | A3-5 | A3-6 | A3-7 | A3-8 | A3-9 |
| LM-4 | A4-1 | A4-2 | A4-3 | A4-4 | A4-5 | A4-6 | A4-7 | A4-8 | A4-9 |
| | A5-1 | A5-2 | A5-3 | A5-4 | A5-5 | A5-6 | A5-7 | A5-8 | A5-9 |
| | A6-1 | A6-2 | A6-3 | A6-4 | A6-5 | A6-6 | A6-7 | A6-8 | A6-9 |

| L1-1 | T1-1 | T1-2 | T1-3 | T1-4 | T1-5 | T1-6 |
|---|---|---|---|---|---|---|

| WG-1 (PU-1) | WG-5 (PU-1) | WG-9 (PU-1) | WG-13 (PU-1) | WG-17 (PU-1) | WG-21 (PU-1) | WG-25 (PU-1) | WG-29 (PU-1) | WG-33 (PU-1) |
|---|---|---|---|---|---|---|---|---|

| L1-2 | T2-1 | T2-2 | T2-3 | T2-4 | T2-5 | T2-6 |
|---|---|---|---|---|---|---|

| WG-2 (PU-2) | WG-6 (PU-2) | WG-10 (PU-2) | WG-14 (PU-2) | WG-18 (PU-2) | WG-22 (PU-2) | WG-26 (PU-2) | WG-30 (PU-2) | WG-34 (PU-2) |
|---|---|---|---|---|---|---|---|---|

| L1-3 | T3-1 | T3-2 | T3-3 | T3-4 | T3-5 | T3-6 |
|---|---|---|---|---|---|---|

| WG-3 (PU-3) | WG-7 (PU-3) | WG-11 (PU-3) | WG-15 (PU-3) | WG-19 (PU-3) | WG-23 (PU-3) | WG-27 (PU-3) | WG-31 (PU-3) | WG-35 (PU-3) |
|---|---|---|---|---|---|---|---|---|

| L1-4 | T4-1 | T4-2 | T4-3 | T4-4 | T4-5 | T4-6 |
|---|---|---|---|---|---|---|

| WG-4 (PU-4) | WG-8 (PU-4) | WG-12 (PU-4) | WG-16 (PU-4) | WG-20 (PU-4) | WG-24 (PU-4) | WG-28 (PU-4) | WG-32 (PU-4) | WG-36 (PU-4) |
|---|---|---|---|---|---|---|---|---|

**FIGURE 9B**

FIGURE 10

1000

S200

1000

F1 F2 X S1 S2 S3 S4 → R1 R2

| 0 | 1 | 2 | 3 | 4 | 5 | 6 | 7 |
|---|---|---|---|---|---|---|---|
| 16 | 17 | 18 | 19 | 20 | 21 | 22 | 23 |
| 32 | 33 | 34 | 35 | 36 | 37 | 38 | 39 |
| 48 | 49 | 50 | 51 | 52 | 53 | 54 | 55 |
| 64 | 65 | 66 | 67 | 68 | 69 | 70 | 71 |
| 80 | 81 | 82 | 83 | 84 | 85 | 86 | 87 |
| 96 | 97 | 98 | 99 | 100 | 101 | 102 | 103 |
| 112 | 113 | 114 | 115 | 116 | 117 | 118 | 119 |

S202

| t0 | t1 | t2 | t3 | t4 | t5 | t6 | t7 |
|----|----|----|----|----|----|----|----|

| O0 | O1 | O2 | O3 | O4 | O5 | O6 | O7 |
|----|----|----|----|----|----|----|----|

1002

S204

| t0 | | X | 0 | 1 | |
|----|---|---|---|---|---|

→

| t0x0 | t0x1 |
|------|------|
| + |

→

1002

| t0x0 | t0x1 |
|------|------|

S206

**FIGURE 11**

| 0 | 1 | 16 | 17 | 32 | 33 | 48 | 49 | 64 | 65 | 80 | 81 | 96 | 97 | 112 | 113 |
|---|---|----|----|----|----|----|----|----|----|----|----|----|----|-----|-----|
| 2 | 3 | 18 | 19 | 34 | 35 | 50 | 51 | 66 | 67 | 82 | 83 | 98 | 99 | 114 | 115 |
| 4 | 5 | 20 | 21 | 36 | 37 | 52 | 53 | 68 | 69 | 84 | 85 | 100 | 101 | 116 | 117 |
| 6 | 7 | 22 | 23 | 38 | 39 | 54 | 55 | 70 | 71 | 86 | 87 | 102 | 103 | 118 | 119 |
| 8 | 9 | 24 | 25 | 40 | 41 | 56 | 57 | 72 | 73 | 88 | 89 | 104 | 105 | 120 | 121 |
| 10 | 11 | 26 | 27 | 42 | 43 | 58 | 59 | 74 | 75 | 90 | 91 | 106 | 107 | 122 | 123 |
| 12 | 13 | 28 | 29 | 44 | 45 | 60 | 61 | 76 | 77 | 92 | 93 | 108 | 109 | 124 | 125 |
| 14 | 15 | 30 | 31 | 46 | 47 | 62 | 63 | 78 | 79 | 94 | 95 | 110 | 111 | 126 | 127 |

| O0 | O1 | O2 | O3 | O4 | O5 | O6 | O7 | O8 | O9 | O10 | O11 | O12 | O13 | O14 | O15 |
|----|----|----|----|----|----|----|----|----|----|-----|-----|-----|-----|-----|-----|

**FIGURE 12A**

1200

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| 16 | 17 | 18 | 19 | 20 | 21 | 22 | 23 | 24 | 25 | 26 | 27 | 28 | 29 | 30 | 31 |
| 32 | 33 | 34 | 35 | 36 | 37 | 38 | 39 | 40 | 41 | 42 | 43 | 44 | 45 | 46 | 47 |
| 48 | 49 | 50 | 51 | 52 | 53 | 54 | 55 | 56 | 57 | 58 | 59 | 60 | 61 | 62 | 63 |
| 64 | 65 | 66 | 67 | 68 | 69 | 70 | 71 | 72 | 73 | 74 | 75 | 76 | 77 | 78 | 79 |
| 80 | 81 | 82 | 83 | 84 | 85 | 86 | 87 | 88 | 89 | 90 | 91 | 92 | 93 | 94 | 95 |
| 96 | 97 | 98 | 99 | 100 | 101 | 102 | 103 | 104 | 105 | 106 | 107 | 108 | 109 | 110 | 111 |
| 112 | 113 | 114 | 115 | 116 | 117 | 118 | 119 | 120 | 121 | 122 | 123 | 124 | 125 | 126 | 127 |

| O0 | O1 | O2 | O3 | O4 | O5 | O6 | O7 | O8 | O9 | O10 | O11 | O12 | O13 | O14 | O15 |
|----|----|----|----|----|----|----|----|----|----|-----|-----|-----|-----|-----|-----|

1202

**FIGURE 12B**

1200

1202

| 0 | 1 | 2 | 3 | 16 | 17 | 18 | 19 | 32 | 33 | 34 | 35 | 48 | 49 | 50 | 51 |
|---|---|---|---|----|----|----|----|----|----|----|----|----|----|----|----|
| 64 | 65 | 66 | 67 | 80 | 81 | 82 | 83 | 96 | 97 | 98 | 99 | 112 | 113 | 114 | 115 |
| 4 | 5 | 6 | 7 | 20 | 21 | 22 | 23 | 36 | 37 | 38 | 39 | 52 | 53 | 54 | 55 |
| 68 | 69 | 70 | 71 | 84 | 85 | 86 | 87 | 100 | 101 | 102 | 103 | 116 | 117 | 118 | 119 |
| 8 | 9 | 10 | 11 | 24 | 25 | 26 | 27 | 40 | 41 | 42 | 43 | 56 | 57 | 58 | 59 |
| 72 | 73 | 74 | 75 | 88 | 89 | 90 | 91 | 104 | 105 | 106 | 107 | 120 | 121 | 122 | 123 |
| 12 | 13 | 14 | 15 | 28 | 29 | 30 | 31 | 44 | 45 | 46 | 47 | 60 | 61 | 62 | 63 |
| 76 | 77 | 78 | 79 | 92 | 93 | 94 | 95 | 108 | 109 | 110 | 111 | 124 | 125 | 126 | 127 |

| O0 | O1 | O2 | O3 | O4 | O5 | O6 | O7 | O8 | O9 | O10 | O11 | O12 | O13 | O14 | O15 |
|----|----|----|----|----|----|----|----|----|----|-----|-----|-----|-----|-----|-----|

**FIGURE 12C**

FIGURE 13

EP 4 672 039 A1

S400 | Obtain address data identifying a first matrix input and a second matrix input

S402 | Store one or more first matrix subunits in a cache dedicated to the first processing unit

S404 | Store a plurality of second matrix subunits in a local memory dedicated to the first processing unit

S406 | Launch a plurality of workgroups within the first processing unit

S408 | Assign a subset of one or more second matrix subunits to each launched workgroup

S410 |
WG-1
Multiply the first matrix subunit with assigned second matrix subunit

· · ·

WG-n
Multiply the first matrix subunit with assigned second matrix subunit

S412 |
WG-1
Accumulate results in assigned output matrix subunit

· · ·

WG-n
Accumulate results in assigned output matrix subunit

**FIGURE 14**

| S500 | Obtain address data identifying a first matrix input and a second matrix input |
|---|---|
| S502 | Transform at least a portion of the second matrix input to obtain a transformed second matrix input, comprising: redistributing a plurality of adjacent linear arrays of the second matrix input to form a single linear array in the transformed second matrix input |
| S504 | Obtain a first matrix subunit from the first matrix input and obtain a transformed second matrix subunit from the transformed second matrix input |
| S506 | Read linear array, $R$, from the single linear array of the transformed second matrix subunit using a multi-value reading register |

| S508 | thread-1<br><br>Read linear array, $P$, from the first matrix subunit using thread-1 | ▪ ▪ ▪ | thread-n<br><br>Read linear array, $P$, from the first matrix subunit using thread-n |
|---|---|---|---|
| S510 | thread-1<br><br>Multiply values in $R$ with corresponding values in $P$ and accumulate the results in a processing register associated with thread | ▪ ▪ ▪ | thread-n<br><br>Multiply values in $R$ with corresponding values in $P$ and accumulate the results in a processing register associated with thread |

FIGURE 15

**FIGURE 16**

FIGURE 17

Europäisches
Patentamt
European
Patent Office
Office européen
des brevets

# EUROPEAN SEARCH REPORT

**Application Number**

EP 25 18 4788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAO XIAOCHEN ET AL: "POPA: Expressing High and Portable Performance across Spatial and Vector Architectures for Tensor Computations", PROCEEDINGS OF THE 22ND ACM WORKSHOP ON HOT TOPICS IN NETWORKS, ACMPUB27, NEW YORK, NY, USA, 1 April 2024 (2024-04-01), pages 199-210, XP059637313, DOI: 10.1145/3626202.3637566 ISBN: 979-8-4007-0419-2 * sections 2 to 6; figures 2, 6-9 * | 1-15 | INV. G06F17/16 G06F9/38 |
| A | PEDRO MARCUELLO ET AL: "Speculative multithreaded processors", CONFERENCE PROCEEDINGS OF THE 1998 INTERNATIONAL CONFERENCE ON SUPERCOMPUTING. MELBOURNE, AUSTRALIA, JULY 13 - 17, 1998; [ACM INTERNATIONAL CONFERENCE ON SUPERCOMPUTING], NEW YORK, NY : ACM, US, 13 July 1998 (1998-07-13), pages 77-84, XP058123292, DOI: 10.1145/277830.277850 ISBN: 978-0-89791-998-2 * figures 1, 4 * | 1-15 | |
| A | JP 2001 229134 A (NEC CORP) 24 August 2001 (2001-08-24) * paragraph [0033] - paragraph [0034]; figures 2A-2D * | 1-15 | |

**TECHNICAL FIELDS SEARCHED (IPC)**

G06F

The present search report has been drawn up for all claims

| Place of search | Date of completion of the search | Examiner |
|---|---|---|
| Berlin | 19 November 2025 | Virnik, Elena |

EPO FORM 1503 03.82 (P04C01)

## ANNEX TO THE EUROPEAN SEARCH REPORT
## ON EUROPEAN PATENT APPLICATION NO.

EP 25 18 4788

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2025

| Patent document cited in search report | Publication date | Patent family member(s) | Publication date |
|---|---|---|---|
| JP 2001229134 A | 24-08-2001 | JP 3487420 B2 | 19-01-2004 |
| | | JP 2001229134 A | 24-08-2001 |

EPO FORM P0459

For more details about this annex : see Official Journal of the European Patent Office, No. 12/82

**REFERENCES CITED IN THE DESCRIPTION**

**Patent documents cited in the description**

- GB 2409107 A